(19) Europäisches Patentamt / European Patent Office / Office européen des brevets

(11) EP 2 070 985 B1

(12) **EUROPEAN PATENT SPECIFICATION**

(45) Date of publication and mention of the grant of the patent:
**20.07.2011 Bulletin 2011/29**

(21) Application number: **07827828.0**

(22) Date of filing: **27.09.2007**

(51) Int Cl.:
***C08L 67/00*** *(2006.01)* ***C08L 23/00*** *(2006.01)*
***C08L 51/00*** *(2006.01)* ***C08L 53/02*** *(2006.01)*
***C08L 101/16*** *(2006.01)*

(86) International application number:
**PCT/JP2007/001049**

(87) International publication number:
**WO 2008/041356 (10.04.2008 Gazette 2008/15)**

(54) **THERMOPLASTIC RESIN COMPOSITION AND RESIN MOLDED ARTICLE**

THERMOPLASTISCHE HARZZUSAMMENSETZUNG UND HARZFORMARTIKEL

COMPOSITION DE RÉSINE THERMOPLASTIQUE ET ARTICLE MOULÉ EN RÉSINE

(84) Designated Contracting States:
**DE GB**

(30) Priority: **03.10.2006 JP 2006271442**
**20.11.2006 JP 2006313040**

(43) Date of publication of application:
**17.06.2009 Bulletin 2009/25**

(73) Proprietor: **Techno Polymer Co., Ltd.**
**Tokyo 104-0041 (JP)**

(72) Inventors:
- **MAWATARI, Masaaki**
**Tokyo 104-0041 (JP)**
- **TONERI, Tatsuya**
**Tokyo 104-0041 (JP)**

(74) Representative: **HOFFMANN EITLE**
**Patent- und Rechtsanwälte**
**Arabellastraße 4**
**81925 München (DE)**

(56) References cited:
**WO-A1-2006/016480** **JP-A- 02 133 457**
**JP-A- 05 078 535** **JP-A- 2005 320 409**
**JP-A- 2006 008 816** **JP-A- 2006 265 422**
**JP-A- 2006 348 060** **JP-A- 2007 277 444**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 070 985 B1

Printed by Jouve, 75001 PARIS (FR)

## Description

### TECHNICAL FIELD

The present invention relates to a thermoplastic resin composition and resin molded product. More specifically, the present invention relates to a thermoplastic resin composition excellent in impact resistance, delamination resistance and surface appearance, and resin molded product.

### BACKGROUND ART

Aliphatic polyesters have been noticed as a material capable of exhibiting a biodegradability. Further, as a part of the aliphatic polyesters, plastics derived from biomasses instead of the conventional petroleum base materials have been developed and noticed as a material that is effective to take measures against global warming problems, and provides an alternative material for petroleum resources which are expected to be exhausted in future.

However, the aliphatic polyesters generally have a low impact resistance and they undergoes a large limitation to applications thereof. Therefore, for the purpose of improving this drawback, there have been proposed various methods blending a polyolefin-based polymer. For example, there have been proposed a composition comprising a polylactic acid and a modified olefin compound (Patent Document 1); a composition comprising an aliphatic polyester and syndiotactic polypropylene (Patent Document 2); and further a composition comprising a polylactic acid and an ethylene-propylene-diene (EPDM)-based thermoplastic elastomer (Patent Document 3).

Patent Document 1: Japanese Patent Application Laid-Open (KOKAI) No. 9-316310(1997)
Patent Document 2: Japanese Patent Application Laid-Open (KOKAI) No. 10-251498(1998)
Patent Document 3: Japanese Patent Application Laid-Open (KOKAI) No. 2002-37987

However, these conventional compositions have failed to exhibit a sufficient effect of improving an impact resistance thereof, and further have such a problem that injection-molded products obtained from these conventional compositions tend to suffer from delamination phenomenon.

### DISCLOSURE OF THE INVENTION

### PROBLEM TO BE SOLVED BY THE INVENTION

An object of the present invention is to provide a thermoplastic resin composition excellent in impact resistance, delamination resistance and surface appearance of a molded product, and a molded product obtained therefrom. The other object of the present invention is to provide a destaticized (antistatic) thermoplastic resin composition excellent in destaticizing property, durability of destaticizing property, impact resistance, chemical resistance and abrasion resistance, and a molded product obtained therefrom.

### MEANS FOR SOLVING THE PROBLEM

As a result of the present inventors' earnest study for achieving the above object, it has been found that when blending an aliphatic polyester with a copolymer having a specific block, by blending a copolymer having a specific block thereinto, a thermoplastic resin composition excellent in impact resistance, delamination resistance and surface appearance can be obtained. Further, it has been found that by blending a specific polymer into the above thermoplastic resin composition, a destaticized (antistatic) thermoplastic resin composition excellent in destaticizing property, durability of destaticizing property, impact resistance, chemical resistance and abrasion resistance can be obtained. Still further, it has been found that by blending a styrene-based resin, a thermoplastic resin composition excellent in impact resistance can be obtained.

Thus, the present invention has been attained on the basis of the above finding and comprises a series of inventions relating each other. Each aspect of the invention is set forth below.

That is, in a first aspect of the present invention, there is provided a thermoplastic resin composition comprising:

5 to 95% by mass of an aliphatic polyester (A),
4 to 94% by mass of an olefin-based resin (B) and
1 to 40% by mass of an aromatic vinyl-based polymer (C) where the total amount of component (A), component (B) and component (C) is 100% by mass,

and further comprising 3 to 100 parts by mass of a styrene-based resin (E) based on 100 parts by mass of total mass of component (A), component (B) and component (C).

The above aromatic vinyl-based polymer (C) is at least one selected from:

an aromatic vinyl-based polymer (C1) which is an elastomer comprising a block copolymer comprising a polymer block mainly comprising an aromatic vinyl compound and a polymer block mainly comprising a conjugated diene compound,
an aromatic vinyl-based polymer (C2) which is an elastomer obtained by hydrogenation of the aromatic vinyl-based polymer (C1), and
an aromatic vinyl-based polymer (C3) which is a graft copolymer obtained by polymerizing a vinyl-based monomer containing an aromatic vinyl compound in the presence of an olefin-based polymer.

The above styrene-based resin (E) is a styrene based resin (E1) and/or styrene-based resin (E2).
The styrene-based resin (E1) is a rubber-reinforced styrene-based resin obtained by polymerizing a vinyl-based monomer comprising an aromatic vinyl compound in the presence of a rubber polymer providing that the aromatic vinyl-based polymer (C1) and the aromatic vinyl-based polymer (C2) are excepted. The styrene-based resin (E2) is a polymer obtained by (co)polymerizing a vinyl-based monomer containing an aromatic vinyl compound in the presence of no rubber polymer as defined in the styrene-based resin (E1).
In a second aspect of the present invention, there is provided a thermoplastic resin composition having destaticized property and comprising:

10 to 90% by mass of an aliphatic polyester (A),
4 to 80% by mass of an olefin-based resin (B),
3 to 40% by mass of an aromatic vinyl-based polymer (C) and
3 to 60% by mass of a block copolymer (D) comprising a block (D1) comprising at least one selected from the group consisting of polyamides, polyesters and polyolefins, and a hydrphilic polymer block (D2)

where the total amount of component (A), component (B), component (C) and component (D) is 100% by mass,
**[0014]** The above aromatic vinyl-based polymer (C) being at least one selected from:

an aromatic vinyl-based polymer (C1) which is an elastomer comprising a block copolymer comprising a polymer block mainly comprising an aromatic vinyl compound and a polymer block mainly comprising a conjugated diene compound,
an aromatic vinyl-based polymer (C2) which is an elastomer obtained by hydrogenation of the aromatic vinyl-based polymer (C1), and
an aromatic vinyl-based polymer (C3) which is a graft copolymer obtained by polymerizing a vinyl-based monomer containing an aromatic vinyl compound in the presence of an olefin-based polymer.

In the preferred embodiment of the above second aspect of the present invention, thermoplastic resin composition having destaticized property further comprises 5 to 100 parts by mass of a styrene-based resin (E) based on 100 parts by mass of total mass of component (A), component (B), component (C) and component (D), wherein the styrene-based resin (E) is a styrene-based resin (E1) and/or styrene-based resin (E2).
The styrene-based resin (E1) is a rubber-reinforced styrene-based resin obtained by polymerizing a vinyl-based monomer comprising an aromatic vinyl compound in the presence of a rubber polymer providing that the aromatic vinyl-based polymer (C1) and the aromatic vinyl-based polymer (C2) are excepted. The styrene-based resin (E2) is a polymer obtained by (co)polymerizing a vinyl-based monomer containing an aromatic vinyl compound in the presence of no rubber polymer as defined in the styrene-based resin (E1).

## EFFECT OF THE INVENTION

According to the present invention, there is provided a thermoplastic resin composition excellent in impact resistance, delamination resistance and surface appearance of a molded product, and a molded product obtained therefrom. Further, according to the present invention, there is provided a thermoplastic resin composition excellent in especially destaticizing property, durability of destaticizing property, impact resistance, chemical resistance and abrasion resistance, and a molded product obtained therefrom.

PREFERRED EMBODIMENTS FOR CARRYING OUT THE INVENTION

The present invention is described in detail below. Meanwhile, the "(co)polymerization" as used herein means both of homopolymerization and copolymerization, the "(meth)acrylic" as used herein means acrylic and/or methacrylic, and the "(meth)acrylate" as used herein means an acrylate and/or a methacrylate.

The thermoplastic resin composition according to the first aspect of the present invention comprises an aliphatic polyester (A), an olefin-based resin (B), a specific aromatic vinyl-based polymer (C), and a styrene-based resin (E) as the essential components.

The thermoplastic resin composition according to the second aspect of the present invention comprises an aliphatic polyester (A), an olefin-based resin (B), an aromatic vinyl-based polymer (C) and a block copolymer (D)as the essential components. In the second aspect of the present invention, as a preferred embodiment, a specific styrene-based resin (E) is used.

<Aliphatic Polyester (A)>

The aliphatic polyester (A) used in the present invention is not particularly limited. Example of the aliphatic polyester (A) include (i) aliphatic polyesters obtained by subjecting an aliphatic diol and an aliphatic dicarboxylic acid or components mainly comprising functional derivatives thereof to polycondensation (A1), (ii) aliphatic polyesters obtained by subjecting a component mainly comprising an aliphatic oxycarboxylic acid, (iii) aliphatic polyesters obtained by subjecting a component mainly comprising a lactone compound such as ε-caprolactone to polycondensation, etc. Among these compounds, preferred are the aliphatic polyesters (i) and (ii), and more preferred are the aliphatic polyester (i).

The aliphatic diol as used herein is represented by the following general formula (1).

$$HO\text{-}R^1\text{-}OH \qquad (1)$$

In the general formula (1), $R^1$ represents a divalent aliphatic hydrocarbon group. $R^1$ has a carbon number of usually 2 to 11 and preferably 2 to 6. $R^1$ may involve a cycloalkylene group and may also have a branched chain. The preferred $R^1$ is "$-(CH_2)_n-$" wherein n is an integer of 2 to 11 and preferably an integer of 2 to 6.

Specific examples of the aliphatic diol include ethylene glycol, trimethylene glycol, 1,3-propanediol, 1,4-butanediol, 1,5-pentanediol, 1,6-hexanediol, 1,4-cyclohexanediol and 1,6-cyclohexane dimethanol. Among these aliphatic diols, from the viewpoint of properties of the obtained aliphatic polyesters, especially preferred is 1,4-butanediol. These aliphatic diols may be used in combination of any two or more thereof.

The aliphatic dicarboxylic acid is represented by the following general formula (2).

$$HOOC\text{-}R^2\text{-}COOH \qquad (2)$$

In the general formula (2), $R^2$ represents a direct bond or a divalent aliphatic hydrocarbon group. $R^2$ has a carbon number of usually 2 to 11 and preferably 2 to 6. $R^2$ may involve a cycloalkylene group and may also have a branched chain. The preferred $R^2$ is "$-(CH_2)_m-$" wherein m is an integer of 0 or 1 to 11 and preferably an integer of 0 or 1 to 6.

Specific examples of the aliphatic dicarboxylic acid include oxalic acid, succinic acid, glutaric acid, adipic acid, sebacic acid, suberic acid and dodecanoic acid. As the derivative of the aliphatic dicarboxylic acid, lower alkyl esters and acid anhydrides of the above acids are exemplified. The derivative of the aliphatic dicarboxylic acid is preferably such a compound obtained by replacing both of two carboxyl groups of the aliphatic dicarboxylic acid with an ester group, etc. Among these compounds, from the viewpoint of properties of the obtained aliphatic polyesters, preferred are succinic acid and adipic acid, and more preferred is succinic acid. The above aliphatic dicarboxylic acids may be used in combination of any two or more thereof.

The aliphatic oxycarboxylic acid is not particularly limited as long as it has one hydroxyl group and one carboxyl group in a molecule thereof. The suitable aliphatic oxycarboxylic acid is represented by the following general formula (3).

$$HO\text{-}R^3\text{-}COOH \qquad (3)$$

In the general formula (3), $R^3$ represents a divalent aliphatic hydrocarbon group. $R^3$ has a carbon number of usually 1 to 11 and preferably 1 to 16. $R^3$ may involve a cycloalkylene group. The preferred $R^3$ is chain hydrocarbon groups. In this, "chain" may also involve branched chains.

The aliphatic oxycarboxylic acid is preferably such a compound having one carbon atom to which a hydroxyl

group and a carboxyl group are bonded, and more preferably a compound represented by the following general formula (4).

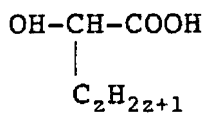 (4)

In the general formula (4), z is an integer of 0 or 1 or more, preferably 0 or 1 to 10, and more preferably 0 or 1 to 5.

Specific examples of the aliphatic oxycarboxylic acid include lactic acid (L-lactic acid and/or D-lactic acid), glycolic acid, 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid, 2-hydroxycaproic acid and mixtures of these acids. If the aliphatic oxycarboxylic acids comprise any optical isomer, the optical isomer may be any of a D-isomer, a L-isomer or a racemic mixture. The aliphatic oxycarboxylic acids may be used in the form of any of a solid, a liquid and an aqueous solution. In particular, lactic acid or glycolic acid and an aqueous solution of any of these acids are preferred because they are remarkably increased in polymerization velocity upon use and are readily available. Lactic acid or glycolic acid has been generally put on the market in the form of an aqueous solution having a concentration of 50%, 70% or 90% and, therefore, is more readily available.

The above aliphatic polyesters (i) obtained from the aliphatic diol compound and the aliphatic dicarboxylic acid compound may be copolymerized with the above aliphatic oxycarboxylic acid. In addition, the above aliphatic polyesters (ii) obtained from the oxycarboxylic acid may be copolymerized with the above aliphatic diol component or aliphatic dicarboxylic acid compound. Further, the above aliphatic polyesters (iii) obtained from the lactone compound may be copolymerized with the above aliphatic oxycarboxylic acid compound, aliphatic diol compound or aliphatic dicarboxylic acid compound.

Furthermore, the above aliphatic polyesters (i), (ii) and (iii) may be appropriately copolymerized with the other compounds, e.g., a trifunctional aliphatic oxycarboxylic acid, or an aromatic dicarboxylic acid such as terephthalic acid, isophthalic acid and naphthalenedicarboxylic acid, an aromatic diol such as bisphenol A, an aromatic oxycarboxylic acid such as hydroxybenzoic acid, etc.

Examples of the catalyst used in the esterification reaction include metal compounds that are soluble in the reaction system such as compounds of germanium, titanium, antimony, tin, magnesium, calcium, zinc, etc. Among these metal compounds, preferred are germanium compounds. Specific examples of the germanium compounds include organic germanium compounds such as tetraalkoxy germaniums, and inorganic germanium compounds such as germanium oxide and germanium chloride. Among these germanium compounds, from the viewpoints of low price and good availability, especially preferred are germanium oxide, tetraethoxy germanium and tetrabutoxy germanium.

The amount of the catalyst used is usually 0.001 to 3% by mass and preferably 0.005 to 1.5% by mass based on a total amount of the raw monomers used. The time of addition of the catalyst is not particularly limited as long as it is prior to production of the polyesters. The catalyst may be added to the reaction system upon charging the raw materials or upon initiation of pressure-reducing. It is especially preferred that the catalyst be added to the reaction system simultaneously with addition of the two functional aliphatic oxycarboxylic acid upon charging the raw materials, or added in the form of a solution prepared by dissolving the catalyst in a bifunctional aliphatic oxycarboxylic acid or an aqueous solution thereof.

The conditions used upon the esterification reaction such as temperature, time and pressure are not particularly limited as long as the aimed aliphatic polyesters can be obtained under the conditions. The reaction temperature is usually 150 to 260˚C and preferably 180 to 230˚C; the polymerization time is usually not less than 1 hr and preferably 2 to 15 hr; and the reaction pressure (vacuum degree) is usually not more than 10 mmHg and preferably not more than 2 mmHg.

The number-average molecular weight (Mn) of the aliphatic polyester (A) is usually 10000 to 200000 and preferably 20000 to 200000 from the viewpoint of good impact resistance as aimed by the present invention. The ratio of the weight-average molecular weight to the number-average molecular weight (Mw/Mn) of the aliphatic polyester (A) is usually not less than 3 and preferably not less than 4.

In the present invention, from the viewpoint of further improving the impact resistance as one of the objects of the present invention, it is preferred that at least one of the diol component and the dicarboxylic acid component (inclusive of derivatives thereof) of the aliphatic polyester-based resin (A) be derived from vegetable materials, and it is more preferred that both of these components be derived from vegetable materials.

<Olefin-based resin (B)>

The olefin-based resin (B) used in the present invention comprises at least one olefins having a carbon number of 2 to 10. Two or more the olefin-based resins (B) may be used in combination.
Examples of the above olefins include α-olefins such as ethylene, propylene, butene-1, hexene-1, 3-methylbutene-1, 4-methylpentene-1 and 3-methylhexene-1. Among these olefins, preferred are ethylene, propylene, butene-1, 3-methylbutene-1 and 4-methylpentene-1, especially preferred are ethylene and propylene. These olefins may be used in combination of any two or more thereof.
Further, as the above olefins, cyclic olefins may be used. Usually, the cyclic olefin is used with the above noncyclic olefin in combination. The cyclic olefins are not particularly limited as long as they are aliphatic compounds having one double bond and there may be exemplified compounds described in Japanese Patent Application Laid-Open (KOKAI) No. 5-310845. Preferred cyclic olefins are cyclic olefin compounds having a carbon number of 11 or less.
As the above cyclic olefin, norbornenes are preferred and a cyclic olefin comprising norbornenes having a carbon number of 11 or less in an amount of 50% by weight or more in the total amount of cyclic olefin. As concrete examples of norbornenes, there are mentioned bicyclo[2.2.1]hept-2-ene derivatives such as bicyclo[2.2.1]hept-2-ene, 6-methylbicyclo[2.2.1]hept-2-ene, 5,6-dimethylbicyclo[2.2.1]hept-2-ene, 1-methylbicyclo[2.2.1]hept-2-ene, 6-ethylbicyclo[2.2.1]hept-2-ene, 6-n-butylbicyclo[2.2.1]hept-2-ene, 6-isobutylbicyclo[2.2.1]hept-2-ene and 7-methylbicyclo[2.2.1]hept-2-ene, tricyclo[4.3.0.12.5]-3-decene derivatives such as tricyclo[4.3.0.12.5]-3-decene, 2-methyltricyclo[4.3.0.12.5]-3-decene and 5-methyltricyclo[4.3.0.12.5]-3-decene, tricyclo[4.3.0.12.5]-3-undecene, or the like. These may be used in combination of any two or more thereof. Incidentally, a cyclic olefin having a carbon number of 12 or more may be used singly or used with the above compound having the carbon number of 11 or less in combination thereof.
Examples of the other monomer which may be contained in the olefin-based resin (B) include non-conjugated dienes such as 4-methyl-1,4-hexadiene, 5-methyl-1,4-hexadiene, 7-methyl-1,6-octadiene and 1,9-decadiene.
The preferred olefin-based resin (B) is polyethylene polypropylene, a polymer comprising a propylene unit as a main component such as propylene/ethylene copolymer as well as ethylene/norbornene copolymer. Among these polymers, more preferred are polypropylene and polymer comprising a propylene unit as a main component such as propylene/ethylene copolymer. These polymers may be used in combination of any two or more thereof and in such case, the preferred is a combination of polypropylene and polyethylene, and a combination of polyethylene and ethylene/norbornene copolymer.
Incidentally, as the above propylene/ethylene copolymer, any of a random copolymer and a block copolymer may be used but the random copolymer is preferred in view of surface appearance thereof.
The above olefin-based resin (B) may be produced by polymerization methods such as high-pressure polymerization method, low-pressure polymerization method and metallocene catalyst polymerization method. Further, there are also preferably used any polyolefin-based resins such as those obtained by removing the polymerization catalyst therefrom, those obtained by removing low-molecular weight compounds therefrom and by modifying with various denaturants (acid anhydride group, carboxyl group, epoxy group or the like).
The crystallinity of the olefin-based resin (B) is not particularly limited. In the olefin-based resin (B), there is preferably used at least one polyolefin-based resin having a crystallinity of not less than 10% as measured at room temperature by X-ray diffraction. Further, the olefin-based resin (B) preferably comprises at least one olefin-based resin having a melting point of not lower than 40˚C as measured according to JIS K7121.
The polypropylene-based resin used as the olefin-based resin (B) has a melt flow rate of usually 0.01 to 500 g/10 min and preferably 0.05 to 100 g/10 min as measured according to JIS K7210:1999 (at 230˚C under a load of 2.16 kg), and the polyethylene-based resin used as the olefin-based resin (B) has a melt flow rate of usually 0.01 to 500 g/10 min and preferably 0.05 to 100 g/10 min as measured according to JIS K6922-2 (at 190˚C under a load of 2.16 kg).
The olefin-based resin (B) may be blended with various additives such as antioxidants, heat stabilizers, sliding agents or the like. In some applications, as the preferred olefin-based resin (B), it is preferred to use those obtained by blending no the various additives mentioned above and having gas generation components from a molded product, those having low-molecular weight hydrocarbon compounds in a small amount or obtained by removing low-molecular weight hydrocarbon compounds therefrom, and those removing polymerization catalyst therefrom.

<Aromatic vinyl-based polymer (C)>

The aromatic vinyl-based polymer (C) used in the present invention is at least one selected from the following aromatic vinyl-based polymer (C1) to (C3).

<Aromatic vinyl-based polymer (C1)>

The aromatic vinyl-based polymer (C1) is an elastomer comprising a block copolymer comprising a polymer

block mainly comprising an aromatic vinyl compound (C-a) and a polymer block mainly comprising a conjugated diene compound (C-b).

As the above aromatic vinyl compound, there are exemplified styrene, α-methyl styrene and hydroxystyrene. Among these aromatic vinyl compounds, preferred is styrene and α-methyl styrene, especially preferred is styrene. As the above conjugated diene compound, there are exemplified butadiene, isoprene, hexadiene, 2,3-dimethyl-1,3-butadiene and 1,3-pentadiene. Among these conjugated diene compounds, preferred is butadiene or isoprene. These may be used in combination of any two or more thereof.

Further, the block (C-b) may be a block constituted with two or more types of conjugated diene compounds and bonded in any shape of random shape, block shape or taper shape. Still further, the block (C-b) may contain 1 to 10 taper blocks where the aromatic vinyl compound increases gradually. Also, the block (C-b) may be formed by copolymerizing with a polymer block different in the vinyl bond content derived from the conjugated diene compound of block (C-b).

The preferred structure of the aromatic vinyl-based polymer (C1) is the following structure formulas (I) to (III).

$$(A\text{-}B)_y \qquad (I)$$

$$(A\text{-}B)_y\text{-}X \qquad (II)$$

$$A\text{-}(B\text{-}A)_z \qquad (III)$$

In the above structure formulas (I) to (III), means of respective notes are explained below.

The note A represents a polymer block mainly comprising an aromatic vinyl compound, which may partially contain a conjugated diene compound as long as the polymer block comprises substantially the aromatic vinyl compound. The content of aromatic vinyl compound in the polymer block is usually not less than 90% by mass, preferably 99% by mass.

The note B represents a homopolymer of a conjugated diene compound or a copolymer block of a conjugated diene compound and the other monomer such as an aromatic vinyl compound. The note X represents a residue of coupling agent. The note Y represents an integer of 1 to 5. The note Z represents an integer of 1 to 5. In case where the note B represents the copolymer block of conjugated diene compound and the other monomer such as an aromatic vinyl compound, the content of the other monomer is usually not more than 50% by mass in the total amount of conjugated diene compound and the other monomer.

The content ratio of the aromatic vinyl compound to the conjugated diene compound in the aromatic vinyl-based polymer (C1) (aromatic vinyl compound/conjugated diene compound) is usually 10 to 70% by mass/30 to 90% by mass, preferably 15 to 65% by mass/35 to 85% by mass, more preferably 20 to 60% by mass/40 to 80% by mass.

The block copolymer comprising the aromatic vinyl compound and the conjugated diene compound is known in the art of anionic polymerization, and it is described in for example Japanese Patent Publication (KOKOKU) No. 47-28915, Japanese Patent Publication (KOKOKU) No. 47-3252, Japanese Patent Publication (KOKOKU) No. 48-2423, Japanese Patent Publication (KOKOKU) No. 48-20038 or the like. Further, the process for producing the polymer block having the taper block shape is described in Japanese Patent Application Laid-Open (KOKAKI) No. 60-81217.

The bonding amount of vinyl group (1,2- and 3,4- bonds) derived from the conjugate diene compound in the aromatic vinyl-based polymer (C1) is usually 5 to 80%, the number average molecular weight of the aromatic vinyl-based polymer (C1) is usually 10,000 to 1,000,000, preferably 20,000 to 500,000, more preferably 20,000 to 200,000. Of these, the preferred number average molecular weight of polymer block represented by reference "A" in the above structural formulas (I) to (III) is 3,000 to 150,000, and the preferred number average molecular weight of polymer block represented by reference "B" in the above structural formulas (I) to (III) is 5,000 to 200,000.

The bonding amount of vinyl group of conjugate diene compound is controlled by using amines such as N,N,N',N-tetramethyl ethylenediamine, trimethylamine, triethylamine and dizaocyclo(2,2,2)octaamine, ethers such as tetrahydrofuran, diethyleneglycol dimethylether and diethyleneglycol dibutylether, thioethers, phosphines, phosphoamides, alkylbenzene sulfonates, alkoxides of potassium and sodium, or the like.

As the component (C1) of the present invention, a polymer obtained by producing a polymer by the above method and prolonging or grafting the chain of polymer by use of a coupling agent is preferably included. As the coupling agent used in the above, there are exemplified diethyl adipate, divinylbenzene, methyldichlorosilane, silicon tetrachloride, silicon butyltrichloride, tin tetrachloride, tin butyltrichloride, silicon dimethylchloride, germanium tetrachloride, 1,2-dibromoethane, 1,4-chloromethylbenzene, bis(trichlorosilyl)ethane, epoxydized linseed oil, tolylene diisocyanate, 1,2,4-benzene triisocyanate, or the like.

In the above block copolymer, in view of impact resistance, a polymer whose block (C-b) has 1 to 10 such taper blocks that the aromatic vinyl compound gradually increases and/or a radial-block type polymer subjected to the

coupling treatment.

<Aromatic vinyl-based polymer (C2)>

The aromatic vinyl-based polymer (C2) is an elastomer prepared by hydrogenating the above aromatic vinyl-based polymer (C1). As the hydrogenation treatment, both partial hydrogenation where 50% or more carbon-carbon double bond in the conjugate diene part is hydrogenated and complete hydrogenation can be employed.
The hydrogenation can be conducted by use of known method. Further, the objective polymer may be obtained by controlling the hydrogenation percentage by a known method. Examples of such known methods include methods described in Japanese Patent Publication (KOKOKU) No. 42-8704, Japanese Patent Publication (KOKOKU) No. 43-6636, Japanese Patent Publication (KOKOKU) No. 63-4841, Japanese Patent Publication (KOKOKU) No. 63-5401, Japanese Patent Application Laid-Open (KOKAI) No. 2-133406, Japanese Patent Application Laid-Open (KOKAI) No. 1-297413, or the like.
The above aromatic vinyl-based polymer (C1) and aromatic vinyl-based polymer (C2) may be chemically bonded to form a block copolymer and/or graft copolymer. In this case, it is not necessary that all 100% by mass of the other polymer chemically bonds thereto and it is sufficient to attain the object of present invention whereby at least 10% by mass of the other polymer is chemically bonded. As the other polymer, aromatic polycarbonates and/or polyurethanes are preferred, aromatic polycarbonates are more preferred. The aromatic polycarbonate block copolymer mixture may be produced by for example a method described in Japanese Patent Application Laid-Open (KOKAI) No. 2001-220506. Further, it is available as the TM polymer series such as "TM-S4L77" (tradename) and "TM-H4L77" (tradename) produced by Kuraray Co., Ltd.
Further, a preferred method for graft polymerizing the other polymer is a method in which a vinyl-based monomer is graft polymerized in the presence of the above aromatic vinyl-based polymer (C1) and/or aromatic vinyl-based polymer (C2). As the vinyl-based monomer used in this case, the vinyl-based monomers (b) described in the following component (E) are preferably used. As the method of graft polymerization, all emulsion polymerization, solution polymerization, bulk polymerization and suspension polymerization can be employed but solution polymerization and bulk polymerization are preferred.

<Aromatic vinyl-based polymer (C3)>

The aromatic vinyl-based polymer (C2) is a graft copolymer obtained by polymerizing a vinyl-based monomer containing an aromatic vinyl compound in the presence of an olefin-based polymer.
As the olefin-based polymer, the all olefin-based polymer described in the above component (B) may be used. In view of impact resistance, the preferred olefin-based polymer is homopolymers or copolymers of propylene or ethylene, and a propylene homopolymer and propylene-based copolymer are more preferred.
As the above vinyl-based monomer containing an aromatic vinyl compound, the al vinyl-based monomers described in the following component (E) are used. The preferred vinyl-based monomer containing an aromatic vinyl compound is a monomer mixture comprising an aromatic vinyl compound and vinyl cyanide compound as essential components, and optionally the other vinyl monomer copolymerizable with the aromatic vinyl compound and vinyl cyanide compound.
As the aromatic vinyl compound used, styrene or $\alpha$-methylstyrene are preferred and as the vinyl cyanide compound, acrylonitrile is preferred. Examples of the other vinyl monomer as the optional component include acrylic esters such as methylacrylate, ethylacrylate, propylacrylate and butylacrylate, methacrylic esters such as methylmethacrylate, ethylmethacrylate, propylmethacrylate and butylmethacrylate, unsaturated carboxylic acid anhydrides such as maleic anhydride, itaconic anhydride and citraconic anhydride, unsaturated carboxylic acids such as acrylic acid and methacrylic acid, maleimide compounds such as maleimide, N-methyl maleimide, N-t-butyl maleimide and N-cyclohexyl maleimide. These other vinyl monomers may be used in combination of any two or more thereof.
The content of olefin-based polymer in the aromatic vinyl-based polymer (C3) is usually 10to 60% by mass, preferably 20 to 50% by mass based on 100% by mass of total amount of the olefin-based polymer and monomer component.
The mass ratio of aromatic vinyl compound to vinyl cyanide compound in the vinyl-based monomer containing an aromatic vinyl compound (aromatic vinyl compound/vinyl cyanide compound) is usually 30/70 to 98/2, preferably 60/40 to 95/5.
The amount of other vinyl monomer copolymerizable therewith is usually not more than 50 parts by mass, preferably not more than 30 parts by mass, more preferably not more than 20 parts by mass based on 100 parts by mass of total amount of aromatic vinyl compound and vinyl cyanide compound.
As a production method of aromatic vinyl-based polymer (C3), known polymerization methods such as emulsion polymerization, bulk polymerization, suspension polymerization and solution polymerization may be employed, especially

solution polymerization is preferred in view of the product quality. As the solution polymerization, batchwise polymerization and continuous polymerization may be employed, but the continuous polymerization is preferred in view of economic view.

As a solvent used in the solution polymerization, there are exemplified inert solvents mainly comprising aromatic hydrocarbons. As aromatic hydrocarbons, there are exemplified benzene, toluene, ethylbenzene, xylene, i-propylbenzene, or the like, preferred is toluene in view of the economic view and product quality. Further, polar solvents such as ketones, esters, ethers, amides and halogenated hydrocarbons may be used in an amount of not more than 30% by mass in the solvent, but it is not preferred to use them with aliphatic hydrocarbon in combination. The amount of solvent used is usually 50 to 200 parts by mass, preferably 60 to 180 parts by mass based on 100 parts by mass of total amount of the olefin-based resin and vinyl monomer component. The polymerization temperature is usually 80 to 140˚C, preferably 90 to 135˚C, more preferably 100 to 130˚C.

When conducting the graft copolymerization, it is preferred to use 10 to 40% by mass of the olefin-based resin and 90 to 40% by mass of vinyl monomer component (total amount of both is 100% by mass). Further, it is preferred that after the olefin-based resin is preliminarily dissolved into the solvent, the graft copolymerization is conducted by adding the vinyl monomer component. In this manner, it is not necessary to dissolve the olefin-based resin uniformly into the solvent and case by case, there is an accepted condition in which the olefin-based resin is dissolved partially or a condition in which the olefin-based resin is swollen. The solvent temperature for dissolving the olefin-based resin is usually 100˚C or more, preferably 105˚C or more, more preferably 110 to 200˚C, especially preferably 110 to 170˚C. It is preferred that the olefin-based resin is dissolved into the solvent within the above temperature for 2 to 5 hours. The solubility of olefin-based resin into the solvent is different by the type of reaction container, usually, the solubility is low in a case where the temperature is less than 100˚C so that the graft percentage is lowered and the objective properties may not be attained. The polymerization time for the graft copolymerization is usually 1 to 10 hours, preferably 1.5 to8 hours, more preferably 2 to 6 hours. When the polymerization time is too short, the polymerization conversion is not raised so that the graft percentage is lowered. On the other hand when the polymerization time is too long, the producibility is lowered.

The graft copolymerization may be carried out using a polymerization initiator, or under heating without using the polymerization initiator but using the polymerization initiator is preferred. As the polymerization initiator, known polymerization initiators may be used without specific limitation but it is preferred to use organic peroxides which is effective for graft copolymerization.

As the above organic peroxides, there are exemplified peroxyester-based compounds, dialkyl peroxide-based compounds, diacyl peroxide-based compounds, peroxydicarbonate-based compounds, peroxyketal-based compounds or the like. As the peroxyester-based compounds,there are exemplified cumylperoxy neodecanoate, 1,1,3,3-tetramethylbutylperoxy neodecanoate, t-hexylperoxy neodecanoate, t-butylperoxy neodecanoate, t-butylperoxy neoheptanoate, t-hexylperoxy valerate, t-butylperoxy pivalerate, 1,1,3,3-tetramethylbutylperoxy-2-ethylhexanoate, 2,5-dimethyl-2,5-di (2-ethylhexanoylperoxy)hexane, t-hexylperoxy-2-ethylhexanoate, t-butylperoxy-2-ethylhexanoate, t-hexylperoxy isopropyl monocarbonate, t-butylperoxy maleic acid, t-butylperoxy-3,5,5-trimethyl hexanoate, t-butylperoxy laurate, t-butylperoxy isopropyl monocarbonate, t-butylperoxy-2-ethylhexyl monocarbonate, t-hexylperoxy benzoate, 2,5-dimethyl-2,5-di(benzoylperoxy)hexane, t-butylperoxy acetate, t-butylperoxy-3-methyl benzoate, t-butylperoxy benzoate or the like. As the dialkyl peroxide-based compounds, there are exemplified di(2-t-butylperoxy isopropyl)benzene, dicumyl peroxide, 2,5-dimethyl-2,5-di(t-butylperoxy)hexane, t-butylcumyl peroxide, di-t-hexyl peroxide, di-t-butyl peroxide, 2,5-dimethyl-2,5-di(t-butylperoxy)hexine-3 or the like. As the diacyl peroxide-based compounds, there are exemplified diisobutyl peroxide, di(3,5,5-trimethylhexanoyl)peroxide, dilauroyl peroxide, disuccinic acid perpxide, di(3-methylbenzoyl)peroxide, benzoyl(3-methylbenzoyl)peroxide, dibenzoyl peroxide, di(4-methylbenzoyl)peroxide or the like. As the peroxydicarbonate-based compounds, there are exemplified din-propylperoxy dicarbonate, diisopropylperoxy dicarbonate, di(4-t-butylcyclohexyl)peroxy dicarbonate, di(2-ethylhexyl)peroxy dicarbonate, di-sec-butylperoxy dicarbonate or the like. As the peroxyketal-based compounds, there are exemplified 1,1-di(t-hexylperoxy)-3,3,5-trimethyl cyclohexane, 1,1-di(t-hexylperoxy)cyclohexane, 1,1-di(t-butylperoxy)-2-methyl cyclohexane, 1,1-di(t-butylperoxy) cyclohexane, 2,2-di(t-butylperoxy)butane, n-butyl-4,4-di(t-butylperoxy)valerate, 2,2-di(4,4-di(t-butylperoxy)cyclohexyl)propane or the like. To or more these polymerization initiators may be used in combination. Among these, preferred compounds are peroxyester-based compounds, more preferred compounds are peroxyester-based compounds whose 10-hours half-life temperature (T10) is 80 to 120˚C, the especially preferred compound is t-butylperoxy isopropyl monocarbonate.

The amount of the above polymerization initiator used is usually 0.01 to 5 parts by mass, preferably 0.05 to 3 parts by mass, more preferably 0.1 to 2 parts by mass. Further, for example, mercaptans and $\alpha$-methyl styrene dimer may be used as the chain transfer agents. Still further, if required, an antioxidant may be added thereinto and as the addition method, the antioxidant may be mixed into the final product or added before or after the polymerization reaction stage.

In case where the solution polymerization is used by using the peroxyester-based compound whose 10-hours half-life temperature (T10) is 80 to 120˚C as the polymerization initiator, it is preferable to conduct the polymerization at he temperature (Tr) range satisfying the following formula (1).

$$T10 \leq Tr \leq T10+30\ (^{\circ}C) \quad (1)$$

In the formula (5), T10 represents 10-hours half-life temperature in the above polymerization initiator.

The graft percentage of the aromatic vinyl-based polymer (C3) is usually 20 to 200% by mass, preferably 30 to 150% by mass and more preferably 40 to 120% by mass. The graft percentage may be calculated according to the following formula (2).

$$\text{Graft percentage (\% by mass)} = \{(T-S)/S\}x100 \quad (2)$$

In the formula (6), T represents a mass (g) of an insoluble component obtained by charging 1 g of the olefin-based resin graft copolymer into 200 mL of acetone, shaking the resulting mixture using a shaker for 2 hr and then separating the mixture into the insoluble component and a soluble component using a centrifugal separator (rotating speed: 23,000 rpm); and S represents a mass (g) of a polyolefin-based resin contained in 1 g of the olefin-based resin graft copolymer.

The intrinsic viscosity [η] of the acetone-soluble component in the aromatic vinyl-based polymer (C3) (as measured at 30˚C using methyl ethyl ketone as a solvent) is usually 0.1 to 1.2 dL/g, preferably 0.2 to 1 dL/g and more preferably 0.2 to 0.8 dL/g.

The melt flow rate of aromatic vinyl-based polymer (C3) (measured at 220˚C under 10kg) (MFR) is usually 5g/10min or more, preferably 10 to 200g/10 min. The izod impact strength of aromatic vinyl-based polymer (C3) is usually 20 to 200 J/m, preferably 90 to 200 J/m. The flexural modulus of aromatic vinyl-based polymer (C3) is usually 1400 to 3000 MPa, preferably 1500 to 3000 MPa.

The aromatic vinyl-based polymer (C3) usually comprises a copolymer formed by graft-copolymerizing the vinyl monomer to the olefin-based resin, and a non-grafted component comprising no olefin-based resin to which the vinyl monomer is grafted (namely, homopolymer of vinyl monomer and copolymer of vinyl monomer each other.

<Block copolymer (D)>

The block copolymer (D) comprises a block (D1) comprising at least one selected from the group consisting of polyamides, polyesters and polyolefins, and a hydrphilic polymer block (D2). Further, in the block (D1), a polyester block and/or a polyolefin block may be copolymerized in a polyamide block, a polyamide block and/or a polyolefin block may be copolymerized in a polyester block, and also a polyamide block and/or a polyester block may be copolymerized in a polyolefin block.

The polyamide may be any of (I) polyamides derived from a diamine component and a dicarboxylic acid component, (II) polyamides obtained by ring-opening polymerization of lactams, (III) polyamides derived from an aminocarboxylic acid, copolymers of these polyamides and mixtures of these polyamides.

Examples of the diamine component used for production of the polyamides (I) include aliphatic, alicyclic or aromatic diamines such as ethylenediamine, tetramethylenediamine, hexamethylenediamine, decamethylenediamine, 2,3,4- or 2,4,4-trimethylene hexamethylenediamine, 1,3- or 1,4-bis(aminomethyl)cyclohexane, bis(p-aminohexyl)methane, phenyl diamine, m-xylylenediamine and p-xylylenediamine. Examples of the dicarboxylic acid component used for production of the polyamides (I) include aliphatic, alicyclic or aromatic dicarboxylic acids such as adipic acid, suberic acid, sebacic acid, cyclohexanedicarboxylic acid, terephthalic acid and isophthalic acid. Examples of the lactams used for production of the polyamides (II) include caprolactam and lauryl lactam. Examples of the aminocarboxylic acid used for production of the polyamides (III) include ω-aminocaproic acid, ω-aminoenanthic acid, aminoundecanoic acid and 1,2-aminododecanoic acid.

Examples of the polyester include polymers obtained from (I) a dicarboxylic acid component having a carbon number of 4 to 20 and/or an ester-forming derivative thereof and (II) a diol component, polymers obtained from a bifunctional oxycarboxylic acid compound, polymers obtained from a caprolactone compound, and copolymers obtained from a compound selected from the group consisting of the above components (I) and (II), bifunctional oxycarboxylic acid compound and caprolactone compound. As the copolymers, preferred are those copolymers obtained from the above components (I) and (II) and bifunctional oxycarboxylic acid compound. The carbon number as used herein means

a total number of carbon atoms contained in the carboxyl group and carbon atoms contained in a chain or a ring directly bonded to the carboxyl group.

Examples of the dicarboxylic acid having a carbon number of 4 to 20 include aliphatic dicarboxylic acids having a carbon number of 4 to 20 such as succinic acid, adipic acid, azelaic acid, sebacic acid, $\alpha,\omega$-dodecanedicarboxylic acid and dodecenyl succinic acid; alicyclic dicarboxylic acids having a carbon number of 8 to 20 such as 1,4-cyclohexanedicarboxylic acid; aromatic dicarboxylic acids having a carbon number of 8 to 12 such as terephthalic acid, isophthalic acid, 1,4-naphthalenedicarboxylic acid, 2,3-naphthalenedicarboxylic acid, 2,6-naphthalenedicarboxylic acid and 2,7-naphthalenedicarboxylic acid; substituted aromatic dicarboxylic acids having a carbon number of 8 to 12 which comprise a sulfonic group bonded to an aromatic ring thereof such as 5-sodium sulfoisophthalic acid, 5-potassium sulfoisophthalic acid and 5-tetrabutyl phosphonium sulfoisophthalic acid; and ester-forming derivatives of these acids such as methyl esters of the above dicarboxylic acids. These dicarboxylic acids may be used in combination of any two or more thereof. Among these dicarboxylic acids, preferred are terephthalic acid, isophthalic acid, 2,6-naphthalenedicarboxylic acid, 5-sodium sulfoisophthalic acid, succinic acid and ester-forming derivatives of these dicarboxylic acids.

AS the diol component, there may be used all compounds previously exemplified as the raw components of the above aliphatic polyester (A). Among these compounds, preferred are ethylene glycol and 1,4-butanediol. In addition, as the diol component, there may also be used lactone compounds such as caprolactone, the bifunctional aliphatic oxycarboxylic acids and bifunctional oxycarboxylic acids previously exemplified as the raw components of the aliphatic polyester (A).

As the polyester used in the present invention, there are preferably used (i) polyesters obtained from the above dicarboxylic acid or ester-forming derivative thereof and the above diol, and (ii) polyesters obtained from the above dicarboxylic acid or ester-forming derivative thereof, the above diol and the above bifunctional oxycarboxylic acid.

The above polyolefin as used herein means a (co)polymer of olefins. As the olefins, the all olefins described in the olefine-based resin (B) can be used. Of these olefins, $\alpha$-olefins such as ethylene, propylene, butene-1, 3-methyl butene-1, 4-methyl pentene-1 and norbornene are preferred. These olefins may be used in combination of any two or more thereof. In addition, as a part of the polymer components, there may also be used non-conjugated dienes such as 4-methyl-1,4-hexadiene, 5-methyl-1,4-hexadiene, 7-ethyl-1,6-octadiene and 1,9-decadiene. The number-average molecular weight of the polyolefins as measured in terms of polystyrene by gel permeation chromatography (GPC) is usually 800 to 20,000, preferably 1,000 to 10,000 and more preferably 1,200 to 6,000.

The polyolefins may be produced by polymerization method, thermal degradation method, etc. In the polymerization method, olefin is (co)polymerized in the presence of a catalyst. Examples of the catalyst include radical catalysts, metal oxide catalysts, Ziegler-Natta catalysts and metallocene catalysts. On the other hand, the low-molecular weight polyolefins can be readily produced by thermal degradation of high-molecular weight polyolefins, for example, according to the method as described in Japanese Patent Application Laid-Open (KOKAI) No. 3-62804 (1991). When producing the block copolymer (D), it is required to modify a molecular end of the polyolefins. From the viewpoint of facilitated modification of the molecular end group, the polyolefins are preferably obtained by the thermal degradation method.

The polyolefins obtained by the thermal degradation method are usually in the form of a mixture of polyolefins having both molecular end groups capable of being modified, and polyolefins having one molecular end group incapable of being modified. The polyolefins preferably comprise the polyolefins having both molecular end groups capable of being modified as a main component. The number of double bonds in the polyolefins obtained by the thermal degradation method is usually 1 to 40, preferably 2 to 30 and more preferably 4 to 20 per the carbon number of 1000 from the viewpoint of a good destaticizing property. The average number of the double bonds per one molecule of the polyolefins is usually 1.1 to 5, preferably 1.3 to 3 and more preferably 1.8 to 2.2 from the viewpoints of a capability of forming a repeated structure and a good destaticizing property. In the thermal degradation method, low-molecular weight polyolefins having a number-average molecular weight (Mn) of 800 to 6,000 and an average number of end double bonds of 1.5 to 2 per one molecule thereof can be readily produced (for example, refer to MURATA, Katsuhide and MAKINO, Tadahiko "Journal of Japan Chemistry Institute", p. 192 (1975)).

As the method for introducing a functional group into the polyolefins, there may be used the method of adding a carbon-to-carbon unsaturated compound having the functional group to the polyolefins that are obtained by the thermal degradation method and have a carbon-to-carbon double bond at molecular ends thereof, etc.

The block (D1) selected from the group consisting of the above polyamide, polyester and polyolefin and hydrophilic polymer block (B2) are bonded to each other by at least one bond selected from the group consisting of an ester bond, an amide bond, an ether bond, an urethane bond and an imide bond. For this reason, it is necessary to modify a molecular end of the above block (B1) with a functional group capable of reacting with the molecular end functional group of the above block (B2). Examples of the functional group include a carboxyl group, a hydroxyl group, an amino group, an acid anhydride group, an oxazoline group, an epoxy group or the like.

As the hydrophilic polymer of hydrophilic polymer block (B2), there are exemplified polyethers, hydrophilic polymers containing polyethers and anionic polymers.

As the polyethers, there are exemplified polyether diols, polyether diamines and modified products thereof. As

the hydrophilic polymers containing polyethers, there are exemplified polyether ester amides having a polyether diol segment, polyether ester amide imides, polyether esters, polyether amides having a polyether diamine segment, polyether urethanes having a polyether diol segment or polyether diamine segment. As the anionic polymers, there are mentioned anionic polymers essentially comprising component units of dicarboxylic acid having a sulfonyl group and the above polyether and having a sulfonyl group. The number of sulfonyl group in one molecule is usually 2 to 80, preferably 3 to 60. The hydrophilic polymer block (B2) may be a straight chain like shape or may be branched chain like shape. As the hydrophilic polymer of hydrophilic polymer block (B2), polyethers are preferred.

As the polyether diols in the polyethers, there are exemplified compounds represented by the following formula (5) or (6).

$$H\text{-}(OA^1)_n\text{-}O\text{-}E^1\text{-}(A^1O)_{n'}\text{-}H \qquad (5)$$

$$H\text{-}(OA^2)_m\text{-}O\text{-}E^2\text{-}(A^2O)_{m'}\text{-}H \qquad (6)$$

In the general formula (5), $E^1$ is a residual group formed by removing hydroxyl groups from a divalent hydroxyl group-containing compound; $A^1$ is an alkylene group having a carbon number of 2 to 4; and n and n' each represent the number of alkylene oxide adducts per one hydroxyl group in the divalent hydroxyl group-containing compound. The ($OA^1$) groups in number of n and the ($A^1O$) groups in number of n' may be the same or different from each other. Also, when these groups are respectively constituted from two or more kinds of oxyalkylene groups, the type of bonding between the groups may be either a block bond, a random bond or combination thereof. The suffixes n and n' are each an integer of usually 1 to 300, preferably 2 to 250 and more preferably 10 to 100, and may be the same or different.

As the above divalent hydroxyl group-containing compound, there are exemplified compounds containing two alcoholic hydroxyl groups or two phenolic hydroxyl groups in one molecule, namely, dihydroxy compounds. Concretely, divalent alcohols (for example aliphatic, alycyclic or aromatic divalent alcohols having a carbon number of 2 to 12), divalent phenols having a carbon number of 6 to 18 and tertiary amino group containing diols are mentioned.

As the aliphatic divalent alcohols, there are exemplified alkylene glycols such as ethylene glycol and propylene glycol, 1,4-butanediol, 1,6-hexanediol, neopentyl glycol, 1,12-dodecanediol or the like. As the alycyclic divalent alcohols, there are exemplified 1,2- and 1,3-cyclopentanediol, 1,2- 1,3- and 1,4-cyclohexanediol, 1,4-cyclohexane dimethanol or the like. As the aromatic divalent alcohols, there are exemplified xylylene diols or the like.

As the divalent phenols, there are exemplified monoaromatic divalent phenols such as hydroquinone, catechol, resorcin and urushiol, bisphenols such as bisphenol A, bisphenol F, bisphenol S, 4,4'-dihydroxydiphenyl-2,2-butane, dihydroxybiphenyl and dihydroxydiphenyl ether, polycondensed divalent phenols such as dihydroxynaphthalene and binaphthol.

In the general formula (6), $E^2$ is a residual group formed by removing hydroxyl groups from a divalent hydroxyl group-containing compound described in the formula (5); and at least part of $A^2$ is a substituted alkylene group represented by the following formula (7) and the remained part may be an alkylene group having a carbon number of 2 to 4.

$$\text{-CHR-CHR'-} \qquad (7)$$

Either R or R' in the formula (7) is a group represented by the following formula (8) and the other is H.

$$\text{-}CH_2O\ (A^3O)_xR'' \qquad (8)$$

In the formula (8), x represents an integer of 1 to 10; R" represents H or an alkyl group, aryl group, alkylaryl group, arylalkyl group or acyl group having a carbon number of 1 to 10; and $A^3$ represents an alkylene group having a carbon number of 2 to 4.

In the formula (6), m ($OA_2$) and m' ($A^2O$) may be equal or different. "m" and "m'" are integers and usually 1 to 300, preferably 2 to 250, more preferably 10 to 100. "m" and "m'" may be equal or different.

The polyether diols represented by the above general formula (5) may be produced by addition reaction in which an alkylene oxide is added to the divalent hydroxyl group-containing compound. As the alkylene oxide, there may be used alkylene oxides having a carbon number of 2 to 4, for example, ethylene oxide, propylene oxide, 1,2-butylene oxide, 1,4-butylene oxide, 2,3-butylene oxide and 1,3-butylene oxide. Two or more of these compounds may be used in combination. The type of bonding between the two or more kinds of alkylene oxides, if used, may be a random bond and/or a block bond. The preferred alkylene oxides are sole ethylene oxide, or random and/or block additional products using ethylene oxide and the other alkylene oxide in combination.

The addition number of the alkylene oxide added is usually 1 to 300, preferably 2 to 350 and more preferably 10 to 100 per one hydroxyl group in the divalent hydroxyl group-containing compound.

The polyether diols represented by the above general formula (6) are preferably produced by the following methods (A) and (B), etc.

(A) The method of polymerizing the above divalent hydroxyl group-containing compound as a starting material with a glycidyl ether represented by the following general formula (9), or copolymerizing the divalent hydroxyl group-containing compound with an alkylene oxide having a carbon number of 2 to 4.

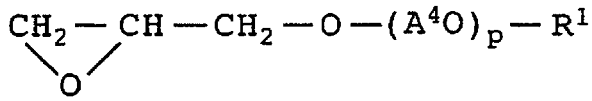

(9)

In the general formula (9), $A^4$ is an alkylene group having a carbon number of 2 to 4; p is an integer of 1 to 10; $R^1$ is a hydrogen atom, an alkyl group, an aryl group, an alkylaryl group or an acyl group having a carbon number of 1 to 10.

(B) The method of producing the polyether diols from the above divalent hydroxyl group-containing compound as a starting material via a polyether having a side chain to which a chloromethyl group is bonded. More specifically, in the method (ii), epichlorohydrin, or epichlorohydrin and an alkylene oxide, are subjected to addition copolymerization to obtain a polyether having a chloromethyl group in a side chain thereof. Then, the resulting polyether is reacted with a poly($C_2$ to $C_4$ alkylene) glycol and $R^1X$ (wherein $R^1$ has the same meaning as defined above; and X is Cl, Br or I) in the presence of an alkali, or the polyether is reacted with a poly($C_2$ to $C_4$ alkylene) glycol monocarbyl ether in the presence of an alkali. As the alkylene oxide having a carbon number of 2 to 4 used in the above method, there may be used all of the alkylene oxides as described previously.

The block copolymer (D) suitably used in the present invention may also be produced by polymerizing the above blocks (D1) and the hydrophilic polymer (D2) by known methods. For example, the block copolymer (D) may be produced by subjecting the blocks (D1) and the hydrophilic polymer (D2) to polymerization reaction at a temperature of 200 to 250°C under reduced pressure. In addition, the polymerization reaction may be conducted using a known polymerization catalyst.

The polymerization catalyst is at least one selected from the group consisting of tin-based catalysts such as monobutyl tin oxide, antimony-based catalysts such as antimony trioxide and antimony dioxide, titanium-based catalysts such as tetrabutyl titanate, zirconium-based catalysts such as zirconium hydroxide, zirconium oxide and zirconium acetate.

The block copolymer (D) may also comprise an alkali metal salt and/or an alkali earth metal salt (F) for the purpose of enhancing destaticizing property thereof. The component (F) may be blended, either before or during the polymerization for obtaining the block copolymer (D), or after the polymerization into the block copolymer (D). Further, the component (F) may be blended at the stage for production of the resin composition having destaticizing property according to the present invention, and may be blended by a method in combination of the above methods.

Examples of the component (F) include organic acid salts, sulfonic acid salts, inorganic acid salts and halides, of alkali metal such as lithium, sodium and potassium and alkali earth metal such as magnesium and calcium.

Specific examples of the component (F) include alkali metal halides such as lithium chloride, sodium chloride, potassium chloride, lithium bromide, sodium bromide and potassium bromide; inorganic acid salts of alkali metals such as sodium perchlorate and potassium perchlorate; organic acid salts of alkali metals such as potassium acetate and lithium stearate; alkali metal salts of alkylsulfonic acids having an alkyl group with a carbon number of 8 to 24 such as octylsufonic acid, dodecylsulfonic acid, tetradecylsulfonic acid, stearylsulfonic acid, tetracosylsulfonic acid and 2-ethylhexylsulfonic acid; alkali metal salts of aromatic sulfonic acids such as phenylsulfonic acid and naphthylsulfonic acid; alkali metal salts of alkylbenzenesulfonic acids having an alkyl group with 6 to 18 such as octylphenylsulfonic acid, dodecylphenylsulfonic acid, dibutylphenylsulfonic acid and dinonylphenylsulfonic acid; alkali metal salts of alkylnaphthalenesulfonic acids having an alkyl group with a carbon number of 2 to 18 such as dimethylnaphthylsulfonic acid, diisopropylnaphthylsulfonic acid and dibutylnaphthylsulfonic acid; and alkali metal salts of fluorinated sulfonic acid (for example, trifluoromethanesulfonic acid). These components (F) may be used in combination of any two or more thereof. The amount of the component (F) used is usually not more than 30% by mass, preferably not more than 20% by mass and more preferably not more than 10% by mass on the basis of the mass of block copolymer (D).

The ratio of the block (D1) to the hydrophilic polymer block (D2) in the block copolymer (D) ((B1)/(B2)) is usually 10 to 90/10 to 90% by mass, preferably 20 to 80/20 to 80% by mass and more preferably 30 to 70/30 to 70% by mass.

The block copolymer (D) comprising a polyolefin as the component of the above block (D1) may be produced, for example, by the methods as described in Japanese Patent Application Laid-Open (KOKAI) Nos. 2001-278985 and

2003-48990, etc. Examples of such a block copolymer (D) include those commercially available products including "PELLESTAT 300 SERIES" such as "PELLESTAT 300", "PELLESTAT 303" and "PELLESTAT 200 SERIES" such as "PELLESTAT 230" and "PELLESTAT 201" all produced by Sanyo Kasei Kogyo Co., Ltd.

In the block copolymer (D) produced by using a polyamide as the component of the above block (D1), the number-average molecular weight of the polyamide is usually 500 to 20,000, preferably 500 to 10,000 and more preferably 500 to 5,000. The molecular weight of the thus produced block copolymer (D) is not particularly limited, and may be adjusted such that a reduction viscosity (ηsp/C) thereof is usually 1.0 to 3.0 and preferably 1.2 to 2.5. The reduction viscosity is the value obtained by measuring a viscosity of a formic acid solution of the copolymer with a concentration of 0.5 g/100 mL at 25˚C. Examples of the especially preferred block copolymer (D) include polyether ester amides formed by bonding a polyamide and a poly(alkylene oxide) glycol block to each other through an ester bond. Such polyether ester amides are available as commercial products such as "PELLESTAT NC6321", "M-140" and "6500" (tradenames) all produced by Sanyo Kasei Kogyo Co., Ltd.

The molecular weight of the block copolymer (D) produced by using a polyester as the component of the above block (D1) is not particularly limited, and may be adjusted such that a reduction viscosity (ηsp/C) thereof is usually 0.3 to 2.5 and preferably 0.5 to 2.5. The reduction viscosity is the value determined by measuring a viscosity of a solution with a concentration of 1.0 g/100 mL which is prepared by dissolving the copolymer in a mixed solvent comprising phenol and tetrachloroethane at mass ratio of 40/60, at 35˚C. Examples of the suitable block copolymer (D) include commercially available products such as "TEP004", "TEP010" and "TEP008" (tradenames) all produced by Takemoto Yushi Co., Ltd.

Either before, during or after the production for the block copolymer (D), known antioxidants, heat stabilizers or the like may be blended. Further, two or more block copolymers (D) may be used in combination. When the polyolefin is used as the component of the block (D1), the resin composition is especially excellent in the destaticizing property. When the polyester is used as the component of the block (D1), the resin composition is especially excellent in the abrasion resistance. When the polyamide is used as the component of the block (D1), the resin composition is especially excellent in the surface appearance.

<Styrene-based resin (E)>

The styrene-based resin used in the present invention comprises the following styrene-based resin (E1) and/or styrene-based resin (E2).

<Styrene-based resin (E1)>

The styrene-based resin (E1) is a rubber-reinforced styrene-based resin obtained by polymerizing a vinyl-based monomer comprising an aromatic vinyl compound in the presence of a rubber polymer providing that the aromatic vinyl-based polymer (C1) and the aromatic vinyl-based polymer (C2) are excepted.

The rubber polymer (a) is not particularly limited. Examples of the rubber polymer (a) include polybutadiene, butadiene-styrene copolymers, butadiene-acrylonitrile copolymers, ethylene-propylene copolymers, ethylene-propylene-non-conjugated diene copolymers, ethylene-butene-1 copolymers, ethylene-butene-1-non-conjugated diene copolymers, acrylic rubbers, silicone rubbers, silicone-acrylic IPN rubbers, natural rubbers etc. Among these rubber polymers, preferred are polybutadiene, butadiene-styrene copolymers, ethylene-propylene copolymers, ethylene-propylene-non-conjugated diene copolymers, acrylic rubbers, silicone rubbers and natural rubbers. These rubber polymers may be used in combination of any two or more thereof.

The gel content in the rubber polymer is not particularly limited. When the styrene-based resin (E1) is obtained by emulsion polymerization, the gel content in the rubber polymer is usually not more than 98% by mass and preferably 40 to 98% by mass. When controlling the gel content in the rubber polymer to the above-specified range, it is possible to obtain, in particular, a thermoplastic resin composition capable of providing a molded product having more excellent impact resistance.

Meanwhile, the above gel content may be determined by the following method. That is, 1 g of the rubber polymer is charged into 100 mL of toluene, and allowed to stand at room temperature for 48 hr. Thereafter, a toluene insoluble solution prepared by filtering the resulting mixture through a 100-mesh wire netting (mass: W1 grams) and the wire netting are dried in vacuo at 80˚C for 6 hr to measure dried weights thereof (mass: W2 grams). The gel content in the rubber polymer is calculated according to the following formula (3).

$$\text{Gel content (\% by mass)} = [\{W2\ (g) - W1\ (g)\}/1\ (g)] \times 100 \qquad (3)$$

The gel content may be controlled by appropriately adjusting the kind and amount of molecular weight controller, polymerization time, polymerization temperature, polymerization conversion rate, etc., upon production of the rubber polymer.

The content of the rubber polymer in the styrene-based resin (E1) is usually 3 to 80% by mass, preferably 5 to 70% by mass and more preferably 10 to 60% by mass based on 100% by mass of the styrene-based resin (E1).

Examples of the aromatic vinyl compound constituting the above vinyl monomer include styrene, α-methyl styrene and hydroxystyrene. Among these aromatic vinyl compounds, preferred are styrene and α-methyl styrene. Two or more these aromatic vinyl compounds may be used in combination.

Examples of the other vinyl monomer capable of being copolymerized with the aromatic vinyl compound include a vinyl cyanide compound, a (meth)acrylic ester compound, a maleimide compound and various other functional group-containing unsaturated compounds.

In the preferred embodiment, the vinyl monomer comprises the aromatic vinyl compound as an essential monomer component, if required, in combination with at least one optional monomer component selected from the group consisting of a vinyl cyanide compound, a (meth)acrylic ester compound and a maleimide compound, and further, if required, together with at least one additional optional monomer component selected from the group consisting of various other functional group-containing unsaturated compounds. Examples of the other functional group-containing unsaturated compounds include unsaturated acid compounds, epoxy group-containing unsaturated compounds, hydroxyl group-containing unsaturated compounds, oxazoline group-containing unsaturated compounds, acid anhydride group-containing unsaturated compounds and substituted or unsubstituted amino group-containing compounds. The above various functional group-containing unsaturated compounds may be used in combination of any two or more thereof.

Examples of the above vinyl cyanide compound include acrylonitrile and methacrylonitrile. These vinyl cyanide compounds may be used in combination of any two or more thereof. When using the vinyl cyanide compound as the other vinyl monomer, a good chemical resistance can be imparted to the resulting resin. The amount of the vinyl cyanide compound used is usually 1 to 60% by mass and preferably 5 to 50% by mass based on a total amount of monomer component.

Examples of the above (meth)acrylic ester compound include methyl acrylate, ethyl acrylate, butyl acrylate, methyl methacrylate, ethyl methacrylate and butyl methacrylate. These (meth)acrylic ester compounds may be used in combination of any two or more thereof. When using the (meth)acrylic ester compound as the other vinyl monomer, the resulting molded product can be enhanced in surface hardness and there is a possibility of improving the compatibility between aliphatic polyester resin (A) and styrene-based resin (E1). The amount of the (meth)acrylic ester compound used is usually 1 to 80% by mass and preferably 5 to 80% by mass based on a total amount of monomer component.

Examples of the above maleimide compound include maleimide, N-phenyl maleimide and N-cyclohexyl maleimide. These maleimide compounds may be used in combination of any two or more thereof. In addition, in order to introduce a maleimide unit into the styrene-based resin, maleic anhydride may be copolymerized with the aromatic vinyl compound, and then the resultant copolymer may be subjected to imidization. When using the maleimide compound as the other vinyl monomer, a good heat resistance can be imparted to the resulting resin. The amount of the maleimide compound used is usually 1 to 60% by mass and preferably 5 to 50% by mass based on a total amount of monomer component.

Examples of the unsaturated compound include acrylic acid, methacrylic acid, ethacrylic acid, maleic acid, fumaric acid, itaconic acid, crotonic acid and cinnamic acid. These unsaturated compounds may be used in combination of any two or more thereof. Examples of the epoxy group-containing compound include glycidyl acrylate, glycidyl methacrylate and allyl glycidyl ether. These epoxy group-containing compounds may be used in combination of any two or more thereof.

Examples of the hydroxyl group-containing compound include 3-hydroxy-1-propane, 4-hydroxy-1-butene, cis-4-hydroxy-2-butene, trans-4-hydroxy-2-butene, 3-hydroxy-2-methyl-1-propene, 2-hydroxyethyl methacrylate, 2-hydroxyethyl acrylate and N-(4-hydroxyphenyl)maleimide. These hydr oxyl group-containing compounds may be used in combination of any two or more thereof.

Examples of the oxazoline group-containing compound include vinyl oxazoline. These oxazoline group-containing compounds may be used in combination of any two or more thereof. Examples of the acid anhydride group-containing compound include maleic anhydride, itaconic anhydride and citraconic anhydride. These acid anhydride group-containing compounds may be used in combination of any two or more thereof.

Examples of the substituted or unsubstituted amino group-containing compound include aminoethyl acrylate,

propylaminoethyl acrylate, dimethylaminoethyl methacrylate, phenylaminoethyl methacrylate, N-vinyldiethyl amine, N-acetylvinyl amine, acrylamine, methacrylamine, N-methyl acrylamine, acrylamide, N-methyl acrylamide and p-aminostyrene. These substituted or unsubstituted amino group-containing compounds may be used in combination of any two or more thereof.

When using the other various functional group-containing unsaturated compounds described above as the other vinyl monomer, a compatibility between the styrene-based resin (E1) and the other polymer can be enhanced upon blending both the components with each other. Examples of the preferred monomer for achieving the above effect include epoxy group-containing unsaturated compounds, unsaturated acid compounds and hydroxyl group-containing unsaturated compounds. The total amount of the above other functional group-containing unsaturated compounds used in the styrene-based resin (E1) is usually 0.1 to 20% by mass and preferably 0.1 to 10% by mass based on a total amount of functional group-containing unsaturated compounds used in the styrene-based resin (E1).

The amount of the monomers other than the aromatic vinyl compound in the total vinyl monomer is usually not more than 80% by mass, preferably not more than 60% by mass and more preferably not more than 40% by mass based on 100% by mass in total of the total vinyl monomer.

Examples of preferred combination of the monomers constituting the vinyl monomer include styrene/acrylonitrile, styrene/methyl methacrylate, styrene/acrylonitrile/methyl methacrylate, styrene/acrylonitrile/glycidyl methacrylate, styrene/acrylonitrile/2-hydroxyethyl methacrylate, styrene/acrylonitrile/(meth)acrylic acid, styrene/N-phenyl maleimide, and styrene/methyl methacrylate/cyclohexyl maleimide. Among these combinations, especially preferred is styrene/acrylonitrile (mass ratio: 65/45 to 90/10), styrene/methyl methacrylate (mass ratio: 80/20 to 20/80) and styrene/acrylonitrile/methyl methacrylate (in which the styrene content is 20 to 80% by mass, and the total content of acrylonitrile and methyl methacrylate optionally lies in the range of 20 to 80% by mass).

The styrene-based resin (E1) may be produced by known polymerization methods such as, for example, emulsion polymerization, bulk polymerization, solution polymerization, suspension polymerization and combination of these polymerization methods. Among these methods, preferred methods for copolymerizing the vinyl-based monomer in the presence of rubber polymer are emulsion polymerization and solution polymerization.

In the emulsion polymerization for producing the styrene-based resin (E1), there may be used any of known polymerization initiators, chain transfer agents, emulsifiers, etc.

Examples of the polymerization initiators include cumene hydroperoxide, p-menthane hydroperoxide, diisopropyl benzene hydroperoxide, tetramethylbutyl hydroperoxide, tert-butyl hydroperoxide, potassium persulfate and azobisisobutyronitrile. Further, as the polymerization initiation assistants, there are preferably used redox-based agents such as various reducing agents, sugar-containing iron pyrophosphate compounds and sulfoxylate compounds.

Examples of the chain transfer agents include octyl mercaptan, n-dodecyl mercaptan, t-dodecyl mercaptan n-hexyl mercaptan and terpinolenes. Examples of the emulsifiers include alkylbenzenesulfonic acid salts such as sodium dodecylbenzenesulfonate; aliphatic sulfonic acid salts such as sodium laurylsulfate; higher fatty acid salts such as potassium laurate, potassium stearate, potassium oleate and potassium palmitate; and rosinates such as potassium rosin ate.

In the emulsion polymerization, the rubber polymer and the vinyl-based monomer may be used in the following manner. That is, the vinyl-based monomer may be added at one time, or intermittently in divided parts or continuously in the presence of a whole amount of the rubber polymer to polymerize both the components with each other. Alternatively, a part of the rubber polymer may be added in the course of the polymerization.

After completion of the emulsion polymerization, the resulting latex is usually coagulated with a coagulant, washed with water and then dried, thereby obtaining particles of the styrene-based resin (E1). In this case, latexes of two or more kinds of the styrene-based resins (E1) obtained by the emulsion polymerization may be appropriately blended together and then coagulated. Examples of the coagulant include inorganic salts such as calcium chloride, magnesium sulfate and magnesium chloride; and acids such as sulfuric acid, hydrochloric acid, acetic acid, citric acid and malic acid. In case of using the above acid as the coagulant, it is preferable to conduct a neutralizing treatment with aqueous alkaline solution. By the neutralizing treatment, the impact resistance and hydrolysis resistance of thermoplastic resin composition according to the present invention may be improved. As the alkaline compound used for the neutralizing treatment, sodium hydroxide and potassium hydroxide are preferred.

The solvent usable when producing the styrene-based resin (E1) by the solution polymerization may be an inert polymerization solvent usually used in radical polymerization. Examples of the solvent include aromatic hydrocarbons such as ethyl benzene and toluene; ketones such as methyl ethyl ketone and acetone; acetonitrile; dimethylformamide; and N-methyl pyrrolidone.

The polymerization temperature is usually 80 to 140°C and preferably 85 to 120°C. The polymerization may be carried out using a polymerization initiator, or under heating without using the polymerization initiator. Examples of the polymerization initiator include organic peroxides such as ketone peroxides, dialkyl peroxides, diacyl peroxides, peroxyesters, hydroperoxides, azobisisobutyronitrile and benzoyl peroxide. In case of using the chain transfer agent, for example, mercaptans, terpinolenes and $\alpha$-methyl styrene dimer may be used as the chain transfer agent. When

producing the styrene-based resin (E1) by bulk polymerization or suspension polymerization, there may be used the polymerization initiators, chain transfer agents, etc., as described in the above solution polymerization. The amount of the residual monomers in the styrene-based resin (E1) produced by the above various polymerization methods is usually not more than 10,000 ppm and preferably not more than 5,000 ppm.

The styrene-based resin (E1) obtained by polymerizing vinyl-based monomer in the presence of rubber polymer usually comprises a copolymer formed by graft-copolymerizing the vinyl-based monomer to the rubber polymer, and a non-grafted component comprising no rubber polymer to which the vinyl-based monomer is grafted. The graft percentage of the styrene-based resin (E1) is usually 20 to 200% by mass, preferably 30 to 150% by mass and more preferably 40 to 120% by mass. The graft percentage may be calculated according to the following formula (4).

$$\text{Graft percentage (\% by mass)} = \{(T-S)/S\} \times 100 \qquad (4)$$

In the formula (8), T represents a mass (g) of an insoluble component obtained by charging 1 g of the styrene-based resin (E1) into 20 mL of acetone, shaking the resulting mixture using a shaker for 2 hr and then separating the mixture into the insoluble component and a soluble component using a centrifugal separator (rotating speed: 23,000 rpm); and S represents a mass (g) of a rubber polymer contained in 1 g of the styrene-based resin (E1).

The intrinsic viscosity [η] of the acetone-soluble component in the styrene-based resin (E1) (as measured at 30˚C using methyl ethyl ketone as a solvent) is usually 0.2 to 1.2 dL/g, preferably 0.2 to 1.0 dL/g and more preferably 0.3 to 0.8 dL/g. The average particle diameter of particles of the grafted rubber polymer which are dispersed in the styrene-based resin (E1) is usually 500 to 30,000 Å, preferably 1,000 to 20,000 Å and more preferably 1,500 to 8,000 Å. The average particle diameter may be measured by known method using an electron microscope.

<Styrene-based resin (E2)>

The styrene-based resin (E2) is a polymer of the above mentioned vinyl-based monomer. Namely, the styrene-based resin (E2) is different from the styrene-based resin (E1) and is a polymer obtained by (co)polymerizing the vinyl-based monomer in the presence of no rubber polymer. Therefore, the definition of styrene-based resin (E2) is the same definition of the styrene-based resin (E1) except for using no "rubber polymer" and the kind and amount of used the "various other functional group-containing unsaturated compounds" are also same to those described in the above. However, the preferable (co)polymerization method of the vinyl-based monomer in the presence of no rubber polymer is bulk polymerization, solution polymerization, suspension polymerization and emulsion polymerization. As the bulk polymerization and solution polymerization, known polymerization methods may be used. As the suspension polymerization and emulsion polymerization, the same methods described in the above styrene-based resin (E1) may be used.

<Thermoplastic resin composition (1)>

The thermoplastic resin composition (1) according to the present invention comprises 5 to 95% by mass of the above aliphatic polyester (A), 4 to 94% by mass of the olefin-based resin (B) and 1 to 40% by mass of the aromatic vinyl-base polymer (C) where the total amount of components (A), (B) and (C) are 100% by mass.

When the amount of aliphatic polyester (A) is less than 5% by mass, the surface appearance of molded product is poor and also it is not preferred in view of biodegradability. When the amount of aliphatic polyester (A) is more than 95% by mass, the impact resistance thereof is poor. The amount of aliphatic polyester (A) is preferably 10 to 92% by mass, more preferably 20 to 85% by mass, especially preferably 30 to 80% by mass.

When the amount of olefin-based resin (B) is less than 4% by mass, the impact resistance, delamination resistance and surface appearance of molded product are poor. When the amount of olefin-based resin (B) is more than 94% by mass, the impact resistance is poor and also it is not preferred in view of biodegradability. The amount of olefin-based resin (B) is preferably 5 to 90% by mass, more preferably 10 to 85% by mass, especially preferably 15 to 80% by mass.

When the amount of aromatic vinyl-base polymer (C) is less than 1% by mass, the impact resistance, delamination resistance and surface appearance of molded product are poor. When the amount of aromatic vinyl-base polymer (C) is more than 40% by mass, the surface appearance of molded product is poor. The amount of aromatic vinyl-base polymer (C) is preferably 3 to 35% by mass, more preferably 5 to 35% by mass, especially preferably 5 to 30% by mass.

Although the aromatic vinyl-base polymer (C) is used for the purpose of enhancing the compatibility between the aliphatic polyester (A) and the olefin-based resin (B) so that the above excellent properties can be attained, case by case of required properties, it is preferred to use the (C1) to (C3) of aromatic vinyl-base polymer (C) selectively.

For instance, in case where the excellent impact resistance is required, it is preferred to use the aromatic vinyl-base polymer (C1) or (C2), especially preferably use the aromatic vinyl-base polymer (C2). In case where the excellent surface appearance of molded product is required, it is preferred to use the aromatic vinyl-base polymer (C3). In case where both excellent impact resistance and surface appearance of molded product are required, it is preferred to use 50 to 95% by mass of the aromatic vinyl-base polymers (C1) and/or (C2) and 5 to 50% by mass of the aromatic vinyl-base polymer (C3) in combination, where the total mass of the above (C1), (C2) and (C3) is 100% by mass.

As the preferred embodiment of the present invention, the thermoplastic resin composition further comprises the above styrene-based resin (E). The amount of styrene-based resin (E) contained is usually 3 to 100 parts by mass, preferably 5 to 85 parts by mass, more preferably 5 to 70 parts by mass, especially preferably 5 to 60 parts by mass based on 100 parts by mass of total amount of the above components (A) to (C). When the amount of amount of styrene-based resin (E) is less than 3 parts by mass, it may be insufficient to attain the improving effect of impact resistance. When the amount of amount of styrene-based resin (E) is more than 100 parts by mass, there may be a tendency that the impact resistance, delamination resistance and surface appearance of molded product are poor.

<Thermoplastic resin composition (2)>

The thermoplastic resin composition (2) having destaticizing property comprises 10 to 90% by mass of the above aliphatic polyester (A), 4 to 80% by mass of the olefin-based resin (B), 3 to 40% by mass of the aromatic vinyl-base polymer (C) and 3 to 60% by mass of the block copolymer (D) where the total amount of components (A), (B), (C) and (D) are 100% by mass.

When the amount of aliphatic polyester (A) is less than 10% by mass, the impact resistance is poor and also it is not preferred in view of biodegradability. When the amount of aliphatic polyester (A) is more than 90% by mass, the destaticizing property and chemical resistance are poor. The amount of aliphatic polyester (A) is preferably 15 to 90% by mass, more preferably 20 to 85% by mass, especially preferably 25 to 80% by mass.

When the amount of olefin-based resin (B) is less than 4% by mass, the chemical resistance is poor. When the amount of olefin-based resin (B) is more than 80% by mass, the destaticizing property is poor and also it is not preferred in view of biodegradability. The amount of olefin-based resin (B) is preferably 5 to 75% by mass, more preferably 5 to 70% by mass, especially preferably 10 to 70% by mass.

When the amount of aromatic vinyl-base polymer (C) is less than 3% by mass, the impact resistance, chemical resistance and abrasion resistance are poor. When the amount of aromatic vinyl-base polymer (C) is more than 40% by mass, the chemical resistance is poor. The amount of aromatic vinyl-base polymer (C) is preferably 5 to 35% by mass, more preferably 10 to 35% by mass, especially preferably 10 to 30% by mass.

The aromatic vinyl-base polymer (C) is used for the purpose of enhancing the compatibility between the aliphatic polyester (A) and the olefin-based resin (B). In view of attaining the excellent impact resistance, it is preferred to use the aromatic vinyl-base polymer (C1) or (C2), especially preferably use the aromatic vinyl-base polymer (C2). On the other hand, in case where the excellent surface appearance of molded product is required, it is preferred to use the aromatic vinyl-base polymer (C3). In case where both excellent impact resistance and surface appearance of molded product are required, it is preferred to use 50 to 95% by mass of the aromatic vinyl-base polymers (C1) and/or (C2) and 5 to 50% by mass of the aromatic vinyl-base polymer (C3) in combination, where the total mass of the above (C1), (C2) and (C3) is 100% by mass.

When the amount of block copolymer (D) is less than 3%, the destaticizing property is poor. When the amount of block copolymer (D) is more than 50%, the abrasion resistance and impact resistance are poor. The amount of block copolymer (D) is preferably 5 to 60% by mass, more preferably 5 to 50% by mass, especially preferably 6 to 45% by mass.

As the preferred embodiment of the present invention, the thermoplastic resin composition further comprises the above styrene-based resin (E). The amount of styrene-based resin (E) contained is usually 5 to 100 parts by mass, preferably 5 to 85 parts by mass, more preferably 5 to 70 parts by mass, especially preferably 5 to 60 parts by mass based on 100 parts by mass of total amount of the above components (A) to (D). When the amount of amount of styrene-based resin (E) is less than 5 parts by mass, it may be insufficient to attain the improving effect of impact resistance. When the amount of amount of styrene-based resin (E) is more than 100 parts by mass, the destaticizing property may be poor.

The thermoplastic polymer composition (2) of the present invention may also comprise a salt (G) having an anion moiety comprising a fluorinated alkylsulfonyl group and a nonionic surfactant (H) for the purpose of enhancing destaticizing property thereof.

Examples of the salt (G) having an anion moiety comprising a fluorinated alkylsulfonyl group include lithium trifluoromethanesulfonate, bis(trifluoromethanesulfonyl)imide lithium and tris(trifluoromethanesulfonyl)methane lithium. Among these salts, preferred is lithium trifluoromethanesulfonate. These salts (G) may be used in combination of any two or more thereof. The salts (G) is available as SANKONOL "0862-13T", "AQ-50T", "TBX-25" (tradename) produced by Sanko Chemical Industry Co., Ltd. in the form of solution or masterbatch.

The amount of the component (G) used is usually 0.01 to 10 parts by mass, preferably 0.05 to 7 parts by mass and more preferably 0.05 to 5 parts by mass, especially preferably 0.1 to 3 parts by mass on the basis of 100 parts by mass of the total amount of the above components (A) to (D).

Examples of the nonionic surfactant (H) include polyhydric alcohol esters, nitrogen-containing compounds (such as amine compounds and amide compounds), etc.

Examples of the polyhydric alcohol esters include glycerol esters, polyglycerol esters, sorbitan esters, ethylene glycol esters and propylene glycol esters.

Examples of the glycerol monoesters include glycerol monolaurate, glycerol monomyristate, glycerol monopalmitate, glycerol monostearate, glycerol monobehenate and glycerol monooleate. Examples of the polyglycerol esters include diglycerol monolaurate, diglycerol monomyristate, diglycerol monopalmitate, diglycerol monostearate, diglycerol monobehenate and diglycerol monooleate.

Examples of the sorbitan esters include sorbitan monooleate, sorbitan monobehenate, sorbitan monostearate, sorbitan monoisostearate, sorbitan monolaurate and sorbitan monopalmitate. Examples of the ethylene glycol esters include ethylene glycol monostearate. Examples of the propylene glycol esters include propylene glycol monostearate.

Among the above compounds, preferred are glycerol monostearate, diglycerol monostearate, glycerol monolaurate, diglycerol monolaurate and sorbitan monostearate.

Examples of the amine compounds include dialkanol amines such as lauryl diethanolamine, myristyl diethanolamine, palmityl diethanolamine, stearyl diethanolamine, oleyl diethanolamine, lauryl diisopropanolamine, myristyl diisopropanolamine, palmityl diisopropanolamine, stearyl diisopropanolamine, oleyl diisopropanolamine and N,N-bishydroxyethylalkylamines (in which the carbon number of the alkyl group is usually 12 to 22).

Examples of the amide compounds include lauryl diethanol amide, myristyl diethanol amide, palmityl diethanol amide, behenyl diethanol amide, oleyl diethanol amide, lauryl diisopropanol amide, myristyl diisopropanol amide, palmityl diisopropanol amide, stearyl diisopropanol amide and oleyl diisopropanol amide.

Among the above compounds, preferred are amine compounds, and more preferred are lauryl diethanolamine and stearyl diethanolamine.

The amount of the nonionic surfactant (H) used is usually 0.05 to 20 parts by mass, preferably 0.1 to 10 parts by mass, more preferably 0.3 to 5 parts by mass on the basis of 100 parts by mass of the total amount of the above components (A) to (D).

The thermoplastic polymer composition of the present invention may be appropriately blended with known additives such as weather (light)-resisting agents, antioxidants, heat stabilizers, lubricants, silicone oils, plasticizers, sliding agents, colorants, dyes, foaming agents, processing assistants (such as ultrahigh-molecular weight acrylic polymers and as ultrahigh-molecular weight styrene-based polymers), flame retardants, nucleating agents and hydrolysis retarders (carbodiimide or the like).

The thermoplastic resin composition of the present invention may also be blended with known inorganic or organic fillers. Examples of these fillers include powder or fibrous fillers such as glass fibers, glass flakes, milled glass fibers, glass beads, hollow glass beads, carbon fibers, milled carbon fibers, silver, copper, brass and iron; carbon black, tin-coated titanium oxide, tin-coated silica, nickel-coated carbon fibers, talc, calcium carbonate, calcium carbonate whiskers, wollastonite, mica, kaolin, montmorillonite, hectorite, zinc oxide whiskers, potassium titanate whiskers, aluminum borate whiskers, plate-shaped alumina, plate-shaped silica, organic-treated smectite, aramid fibers, phenol fibers, polyester fibers, kenaf fibers, wood powders, cellulose fibers and starch. These fillers may be used in combination of any two or more thereof.

The above fillers may be treated with known coupling agents, surface-treating agents or sizing agents for the purpose of enhancing a dispersibility thereof. Examples of the known coupling agents include silane-based coupling agents, titanate-based coupling agents and aluminum-based coupling agents. The amount of the above inorganic/organic filler used is usually 1 to 200 parts by mass on the basis of 100 parts by mass of the thermoplastic resin composition of the present invention.

The thermoplastic resin composition of the present invention may also be appropriately blended with the other known polymers. As the other polymers, there are exemplified polyamide resins, polyamide elastomers, polyester resins such as polybutylene terephthalate, polyethylene terephthalate, polyarylates and liquid-crystal polyesters, polyester elastomers, polycarbonate, PMMA, methyl methacrylate-maleimide compound copolymers, polyphenylene ethers, polyphenylene sulfides, aromatic polycarbonates, thermoplastic polyurethanes, epoxy resins, phenol resins, urea resins, phenoxy resins, etc.

The thermoplastic resin composition of the present invention may be produced by melt-kneading the above respective components using various extruders, a Banbury mixer, a kneader, a continuous kneader, a roll, etc. In the kneading treatment, the respective components may be added at one time or intermittently in divided parts.

The thermoplastic resin composition of the present invention may be formed into a resin molded product by known molding methods such as injection molding, press molding, calender molding, T-die molding, inflation molding, lamination molding, vacuum forming and contour-extrusion molding. Examples of the resin molded product include

injection-molded products, sheet molded products (including multilayer sheets), film molded products, contour-extrusion molded products and vacuum molded products.

The thus obtained resin molded products can be suitably used as various parts housings or the like in applications of domestic appliance, building materials, sanitary applications, vehicles etc., because of excellent impact resistance, abrasion resistance and surface appearance of molded products.

EXAMPLES

The present invention is described in more detail by the following examples, but these examples are only illustrative and not intended to limit a scope of the present invention. Meanwhile, in the following examples, etc., the "part(s)" and "%" represent "part(s) by mass" and "% by mass", respectively, unless otherwise specified. The various properties and evaluations in Examples and Comparative Examples are measured by the following methods.

<Evaluation methods>

(1) Gel content of rubber polymer:

Measured by the above-described method.

(2) Average particle diameter of rubber polymer latex:

The average particle diameter of the rubber polymer latex used for producing the styrene-based resin (E) was measured by a light scattering method. The measurement was performed using a measuring apparatus "LPA-3100 Model" manufactured by Otsuka Denshi Co., Ltd., by a cumulant method at a cumulative frequency of 70 times. Meanwhile, it was confirmed by using an electron microscope that the diameter of particles of the grafted rubber polymer dispersed in the aromatic vinyl-based resin (C3) was approximately the same as the particle diameter of the latex.

(3) Graft percentage of styrene-based resin (E):

Measured by the above-described method.

(4) Intrinsic viscosity [η] of acetone-soluble component of aromatic vinyl-based resin (C3) and styrene-based resin (E):

Measured by the above-described method.

(5) Impact resistance (A):

A molded product having a size of 2.4 mm x 50 mm x 100 mm as a test piece was punched using a punching bar having a diameter of 1/2 inch and a tip end R of 1/2 inch at a punching speed of 2.4 m/sec to measure a breaking energy (kgf·cm) thereof.

(6) Delamination resistance:

The broken surface in the above test (5) was visual observed and evaluated as the following two criterions.

○: No delamination is observed.

×: Delamination is clearly observed.

(7) Surface appearance of molded product:

The surface of molded product in the above test (5) was visual observed and evaluated as the following two criterions.

○: No flow mark is observed in the molded product and the surface thereof is smooth.
×: There is a flow marks in the molded product or the surface is not smooth.

(8)_Destaticizing property:

As the test piece, a molded product having a dimension of 2.4 mm X 76 mm X 127 mm was used. According to FTMS-101 (Federal Test Method Standard), after applying +5KV to the molded product by use of "STATICDECAYMETER406D produced by ETS Co., Ltd. (US), at 23˚C, under relative humidity of 12%, then connecting to ground, a time (second) until when the applied voltage was reduced to 50V was measured.

(9) Persistency of destaticizing property:

The molded product used in the above test (8) was immersed in distilled water for 10 days and dried sufficiently, and then the evaluation of destaticizing property according to the above test (5) was conducted.

(10) Impact resistance (B):

According to ISO 179, the Charpy impact strength ($KJ/m^2$) of a molded product prepared according to the same ISO Standard was measured.

(11) Chemical resistance:

According to ISO 527, a molded product having the standardized size defined in ISO 527 was used and the tensile strength thereof was measured (T0). Further, the above standardized molded product was immersed into a 5% aqueous sodium hydroxide solution at 23˚C for 10 days. After immersing, it was dried and subject to the tensile strength measurement under the above condition in the measurement of T0 to measure the tensile strength (T1) and a retention rate of tensile strength (%) was calculated according to the following formula (5). By using the retention rate of tensile strength, the results were evaluated according to the following two ratings: "A": retention rate of not less than 80%; "C": retention rate of less than 80%.

$$\text{Retention Rate of tensile strength (\%)} = T1/T0 \times 100 \quad (5)$$

(12) Abrasion resistance:

According to JIS K7204, a molded product prepared according to the same JIS was subjected to Taber abrasion test to measure a Taber-volume loss (mg) thereof. The measurement was carried out using a weight of 500 g and a truck wheel CS17 at a frequency of 1000 times.

<Components of thermoplastic polymer composition>

(1) ·Aliphatic polyester (A):

A1: "GSPlaAZ91T" (tradename) produced by Mitsubishi Chemical Corporation; aliphatic polyester obtained from succinic acid and 1,4-butanediol as main components
A2: "LACEAH-100J" (tradename) produced by Mitsui Chemicals, Inc.; polylactic acid-based polyester

(2) olefin-based resin (B):

B1: Random-type polypropylene "NOVATEC PPEG8" (tradename) produced by Japan Polypropylene Corporation, melt flow rate: 0.8g/10 min
B2: Homopolymer-type polypropylene "NOVATEC PPFY6C" (tradename) produced by Japan Polypropylene Corporation, melt flow rate: 2.4g/10 min
B3: Block-type polypropylene "NOVATEC PPBC6C" (tradename) produced by Japan Polypropylene Corporation, melt flow rate: 2.5g/10 min

B4: Metallocene catalyst-polymerized polyethylene "HARMOREX NF464N" (tradename) produced by Japan Polyethylene Corporation, melt flow rate: 2.0g/10 min

(3) Aromatic vinyl-based polymer (C)

C1: Styrene-butadiene-styrene block copolymer "TR250" (tradename) produced by JSR Corporation, styrene content: 35%
C2-1: Hydrogenated product of styrene-butadiene-styrene block copolymer "Tuftec H1041" (tradename) produced by Asahi Kasei Chemicals Corporation, styrene content: 30%
C2-2: Partial hydrogenated product of styrene-butadiene-styrene block copolymer "Tuftec P2000" (tradename) produced by Asahi Kasei Chemicals Corporation, styrene content: 67%
C3 to C5: C3 to C5 obtained by the following Production Examples 1 to 3, respectively were used.

(4) Block copolymer (D)

D1: Polyamide-polyethylene glycol block copolymer (sodium compound-containing product; sodium content: 1120 ppm), "PELESTAT M-140" (tradename) produced by Sanyo Kasei Kogyo Co., Ltd.
D2: Polyester-polyethylene glycol block copolymer (sodium compound-containing product; sodium content: 12350 ppm), "TEP004" (tradename) produced by Takemoto Yushi Co., Ltd.
D3: Polypropylene-polyethylene glycol block copolymer (sodium compound-containing product; sodium content: 4540 ppm), "PELESTAT 303" (tradename) produced by Sanyo Kasei Kogyo Co., Ltd.
D4: Polyolefin-polyethylene glycol block copolymer "PELESTAT 201" (tradename) produced by Sanyo Kasei Kogyo Co., Ltd.

(5) Styrene-based resin (E):

E1 and E2: E1 and E2 obtained by the following Production Examples 4 and 5, respectively were used.

Production Example 1 (Production of styrene-butadiene radial tereblock copolymer (C3):

A jacketed autoclave equipped with a stirrer was dried and purged with nitrogen, and 2.75 parts of cyclohexane and tetrahydrofuran were charged. Then, 25 parts of styrene was added, the temperature was raised to 60˚C and a cyclohexane solution containing n-butyllithium was added to conduct the first polymerization for 60 minutes. Next, a mixture composed of 3 parts of styrene and 20 parts of butadiene was added to conduct the second polymerization for 60 minutes. Further, a mixture composed of 3 parts of styrene and 20 parts of butadiene was added to conduct the third polymerization for 60 minutes. Still further, 29 parts of butadiene was added and the polymerization was conducted and completed until the conversion reached to 100%. 0.1 parts of silicon tetrachloride as a coupling agent was added to complete the coupling reaction. After polymerization, 0.3 parts of 2,6-di-tert-butylcatechol per 100 parts of the above obtained copolymer was added, and thereafter the solvent was removed to obtain a coupling type styrene-butadiene block copolymer (C5) having taper blocks. It was confirmed that the thus obtained block copolymer had a styrene content of 31% and a number average molecular weight of 200,000.

Production Example 2 (Production of complete hydrogenated styrene-butadiene block copolymer C(4):

A jacketed autoclave equipped with a stirrer was dried and purged with nitrogen, and a cyclohexane solution containing 15 parts of styrene was charged thereinto. Then, n-butyllithium was added thereinto, the polymerization was conducted for 1 hour at 70˚C, and thereafter a cyclohexane solution containing 70 parts of butadiene was added thereinto to conduct the polymerization for 1 hour. Thereafter, a cyclohexane solution containing 15 parts of styrene was added and the polymerization was conducted for 1 hour. Then, a part of the obtained block polymer solution was taken out for sampling and 0.3 parts of 2,6-ditert-butylcatechol per 100 parts of block copolymer, and then the solvent was heated and removed. This product had a styrene content of 30%, an amount of 1,2-vinyl bond in the polybutadiene block of 35% and number average molecular weight of 74,000. A solution prepared by reacting titanocene dichloride with triethyl

aluminum in cyclohexane was added into the remained block copolymer solution, hydrogenation reaction was conducted for 3 hours at 50˚C under a hydrogen gas pressure of 50 kgf/cm$^2$. 0.3 parts of 2,6-di-tert-butyl catechol per 100 parts of block copolymer was added. Thereafter, the solvent was removed to obtain a polymer (C4) whose hydrogenation percentage of butadiene block was 100%.

Production Example 3 (Production of polypropylene resin graft copolymer (C5):

A stainless steel autoclave equipped with a ribbon type stirring blade was purged with nitrogen. Thereafter, under a nitrogen flow, 40 parts of polypropylene ("Novatec PPMA3" (tradename) produced by Japan Polypropylene Corporation; melt flow rate: 11g/10 min) and 140 parts of toluene were charged thereinto and stirred for 2 hours while the inside temperature was raised to 120˚C and maintained the temperature, to conduct dissolving thereof. After the inside temperature was lowered to 95˚C and 42 parts of styrene, 18 parts of acrylonitrile and 0.5 parts of t-butylperoxy isopropyl monocarbonate as the polymerization initiator and the inside temperature was raised to 120˚C again to conduct the reaction for 3 hours while maintaining the temperature. After the temperature was lowered to 10˚C to cool it, 0.2 parts of octadecyl-3-(3,5-di-tert-butyl-4-hydroxyphenol) was added, and then the reaction mixture was drawn from the autoclave. By conducting steam distillation to the product, the unreacted monomer and solvent were removed. It was confirmed that the thus obtained polypropylene-based resin graft copolymer had a graft percentage of 40.8% and an intrinsic viscosity [η] of 0.225 dL/g.

Production Example 4 (Production of rubber-reinforced styrene-based resin (E1)):

75 parts of ion-exchanged water, 0.5 part of potassium rosinate, 0.1 part of tert-dodecyl mercaptan, 30 parts (solid content) of a polybutadiene latex (average particle diameter: 2000 Å; gel content: 85%), 10 parts (solid content) of styrene-butadiene copolymer latex (styrene content: 25%; average particle diameter: 6000 Å), 15 parts of styrene and 5 parts of acrylonitrile were charged into a glass flask equipped with a stirrer under a nitrogen flow, and heated while stirring. When an inside temperature of the flask reached 45˚C, a solution prepared by dissolving 0.2 part of sodium pyrophosphate, 0.01 part of ferrous sulfate heptahydrate and 0.2 part of glucose in 20 parts of ion-exchanged water were added thereto. Thereafter, 0.07 part of cumene hydroperoxide was added to the flask to initiate polymerization of the contents in the flask. After conducting the polymerization for 1 hr, 50 parts of ion-exchanged water, 0.7 part of potassium rosinate, 30 parts of styrene, 10 parts of acrylonitrile, 0.05 part of tert-dodecyl mercaptan and 0.01 part of cumene hydroperoxide were continuously added to the flask over 3 hr, and the polymerization of the contents in the flask was further continued for 1 hr, and then 0.2 part of 2,2'-methylene-bis(4-ethyl-6-tert-butyl phenol) was added to the flask to complete the polymerization. The obtained reaction product in the form of a latex was coagulated with an aqueous sulfuric acid solution, washed with water and then washed and neutralized with a potassium hydroxide aqueous solution. Further, the resulting product was washed with water and then dried to obtain a rubber-reinforced styrene-based resin (D-1). It was confirmed that the thus obtained resin had a graft percentage of 68%, and the intrinsic viscosity [η] of an acetone-soluble component therein was 0.45 dL/g.

Production Example 5 (Production of styrene-based resin (E2)

Two jacketed polymerization reactors equipped with a ribbon blade were connected with each other, and purged with nitrogen. Thereafter, 75 parts of styrene, 25 parts of acrylonitrile and 20 parts of toluene were continuously added to the first reactor, and further a solution prepared by dissolving 0.12 part of tert-dodecyl mercaptan as a molecular weight controller in 5 parts of toluene and a solution prepared by dissolving 0.1 part of 1,1'-azobis(cyclohexane-1-carbonitrile) as a polymerization initiator in 5 parts of toluene were continuously supplied thereto. The polymerization temperature in the first reactor was controlled to 110˚C, and the average residence time therein was 2.0 hr and the polymerization conversion rate therein was 57%. The resulting polymer solution was continuously withdrawn from the first reactor using a pump disposed outside of the first reactor in an amount equivalent to the total amount of styrene, acrylonitrile, toluene, the molecular weight controller and the polymerization initiator supplied thereto, and fed to the second reactor. The polymerization in the second reactor was conducted at 130˚C, so that the polymerization conversion rate was 75%. The copolymer solution obtained in the second reactor was fed to a twin-screw three-stage vented extruder to directly volatilize the unreacted monomers and the solvent therefrom, thereby obtaining a styrene-based resin (D2) having an intrinsic viscosity [η] of 0.48 dL/g.

<Thermoplastic resin composition (1)>

Reference Examples 1A to 7A, Examples 8A to 16A and Comparative Examples 1A to 10A:

The components shown in Tables 1 and 2 were blended together at ratios shown in these Tables using a Henschel mixer, and melt-kneaded using a twin-screw extruder (cylinder set temperature: 210°C) and then pelletized. The resulting pellets were fully dried and then injection-molded (at a cylinder set temperature of 200°C) to obtain a test piece. The evaluation results are shown in Tables 1 and 2.

Table 1

| Ex. No. | Blending ratios (Parts) | | | | | | | |
|---|---|---|---|---|---|---|---|---|
| | Component (A) | | Component (B) | | Component (C) | | | |
| | Kind | Parts by mass | Kind | Parts by mass | Kind | Parts by mass | Kind | Parts by mass |
| 1A+ | A1 | 50 | B2 | 30 | C4 | 20 | - | - |
| 2A+ | A2 | 50 | B2 | 30 | C4 | 20 | - | - |
| 3A+ | A1 | 30 | B2 | 50 | C4 | 20 | - | - |
| 4A+ | A1 | 70 | B1 | 10 | C4 | 10 | - | - |
| 5A+ | A1 | 50 | B2 | 30 | C4 | 20 | - | - |
| 6A+ | A1 | 50 | B2 | 30 | C3 | 20 | - | - |
| 7A+ | A1 | 50 | B2 | 30 | C5 | 20 | - | - |
| 8A | A1 | 50 | B1 | 25 | C4 | 25 | - | - |
| 9A | A2 | 50 | B1 | 25 | C4 | 25 | - | - |
| 10A | A1 | 50 | B2 | 25 | C4 | 25 | - | - |
| 11A | A1 | 50 | B3 | 25 | C4 | 25 | - | - |
| 12A | A1 | 50 | B4 | 25 | C4 | 25 | - | - |
| 13A | A1 | 66.7 | B1 | 22.2 | C3 | 11.1 | - | - |
| 14A | A1 | 35.3 | B1 | 47.1 | C3 | 17.6 | - | - |
| 15A | A1 | 50 | B1 | 25 | C5 | 25 | - | - |
| 16A | A1 | 50 | B1 | 25 | C4 | 12.5 | C5 | 12.5 |

+: Reference Example (not within the scope of the present application)

Table 1 (Continued)

| Ex. No. | Blending ratios (Parts) Component (E)*) | | | | Evaluation results |
|---|---|---|---|---|---|
| | Kind | Parts by mass | Kind | Parts by mass | Impact resistance (A) (kgf·cm) |
| 1A+ | - | - | - | - | 180 |
| 2A+ | - | - | - | - | 160 |
| 3A+ | - | - | - | - | 200 |
| 4A+ | - | - | - | - | 150 |
| 5A+ | - | - | - | - | 160 |
| 6A+ | - | - | - | - | 160 |
| 7A+ | - | - | - | - | 100 |
| 8A | E1 | 12.5 | E2 | 12.5 | 320 |
| 9A | E1 | 12.5 | E2 | 12.5 | 270 |
| 10A | E1 | 12.5 | E2 | 12.5 | 300 |
| 11A | E1 | 12.5 | E2 | 12.5 | 330 |
| 12A | E1 | 12.5 | E2 | 12.5 | 260 |
| 13A | E1 | 5.6 | E2 | 5.6 | 240 |
| 14A | E1 | 11.8 | E2 | 5.9 | 320 |
| 15A | E1 | 12.5 | E2 | 12.5 | 220 |
| 16A | E1 | 12.5 | E2 | 12.5 | 300 |

Note *): Ratios of components blended based on 100 parts by weight of total amount of components (A) to (C)

+: Reference Example (not within the scope of the present application)

Table 1 (Continued)

| Ex. No. | Evaluation results | |
|---|---|---|
| | Delamination resistance property | Surface appearance of molded product |
| 1A+ | ○ | ○ |
| 2A+ | ○ | ○ |
| 3A+ | ○ | ○ |
| 4A+ | ○ | ○ |
| 5A+ | ○ | ○ |
| 6A+ | ○ | ○ |
| 7A+ | ○ | ○ |
| 8A | ○ | ○ |
| 9A | ○ | ○ |
| 10A | ○ | ○ |
| 11A | ○ | ○ |
| 12A | ○ | ○ |
| 13A | ○ | ○ |
| 14A | ○ | ○ |
| 15A | ○ | ○ |
| 16A | ○ | ○ |

+ : Reference Example (not within the scope of the present application)

Table 2

| Comp. Ex. No. | Blending ratios (Parts) | | | | | | | |
|---|---|---|---|---|---|---|---|---|
| | Component (A) | | Component (B) | | Component (C) | | | |
| | Kind | Parts by mass | Kind | Parts by mass | Kind | Parts by mass | Kind | Parts by mass |
| 1A | A1 | 2 | B2 | 68 | C4 | 30 | - | - |
| 2A | A1 | 98 | B2 | 1 | C4 | 1 | - | - |
| 3A | A1 | 68 | B2 | 2 | C4 | 30 | - | - |
| 4A | A1 | 1 | B2 | 98 | C4 | 1 | - | - |
| 5A | A1 | 50 | B2 | 49.9 | C4 | 0.1 | - | - |
| 6A | A1 | 25 | B2 | 25 | C4 | 50 | - | - |
| 7A | A1 | 2 | B1 | 68 | C4 | 30 | - | - |
| 8A | A1 | 50 | B1 | 49.9 | C4 | 0.1 | - | - |
| 9A | A1 | 37.5 | B1 | 37.5 | C4 | 25 | - | - |
| 10A | A1 | 68 | B1 | 2 | C4 | 30 | - | - |

Table 2 (Continued)

| Comp. Ex. No. | Blending ratios (Parts) Component (E)*) | | | | Evaluation results |
|---|---|---|---|---|---|
| | Kind | Parts by mass | Kind | Parts by mass | Impact resistance (A) (kgf·cm) |
| 1A | - | - | - | - | 140 |
| 2A | - | - | - | - | 20 |
| 3A | - | - | - | - | 10 |
| 4A | - | - | - | - | 60 |
| 5A | - | - | - | - | 10 |
| 6A | - | - | - | - | 140 |
| 7A | E1 | 33.3 | E2 | 33.3 | 300 |
| 8A | E1 | 33.1 | E2 | 32.2 | 30 |
| 9A | E1 | 75 | E2 | 75 | 80 |
| 10A | E1 | 21.1 | E2 | 19.7 | 50 |

Note *): Ratios of components blended based on 100 parts by weight of total amount of components (A) to (C)

Table 2 (Continued)

| Ex. No. | Evaluation results | |
|---|---|---|
| | Delamination resistance property | Surface appearance of molded product |
| 1A+ | ○ | × |
| 2A+ | ○ | ○ |
| 3A+ | × | × |
| 4A+ | ○ | ○ |
| 5A+ | × | × |
| 6A+ | ○ | × |
| 7A+ | ○ | × |
| 8A | × | × |
| 9A | × | × |
| 10A | × | × |

+ : Reference Example (not within the scope of the present application)

From the results shown in Tables 1 and 2, the followings are apparently recognized.

(1) The resin compositions obtained in Reference Examples 1A to 7A were excellent in the impact resistance, delamination resistance and surface appearance thereof. On the other hand, in Comparative Example 1A, since the amount of component (A) used was out of the range as defined by the present invention, the surface appearance thereof was poor. In Comparative Example 2A, since the amount of the component (A) used was larger than the range as defined by the present invention, and the amounts of the component (B) and component (C) used were smaller than the specific range as defined by the present invention, the impact strength was poor. In Comparative Example 3A, since the amount of the component (B) used was smaller than the specific range as defined by the present invention, the

impact resistance, delamination resistance and surface appearance thereof were poor. In Comparative Example 4A, since the amount of the component (B) used was larger than the specific range as defined by the present invention and the amount of the component (A) used was smaller than the range as defined by the present invention, the impact resistance was poor. In Comparative Example 5A, since the amount of the component (C) used was smaller than the specific range as defined by the present invention, the impact resistance, delamination resistance and surface appearance thereof were poor. In Comparative Example 6A, since the amount of the component (C) used was larger than the specific range as defined by the present invention, the surface appearance thereof was poor.

(2) The molded products obtained in Examples 8A to 16A were excellent in the impact resistance, delamination resistance and surface appearance thereof and especially, the impact resistance is more excellent than that in case of Reference Examples 1A to 7A because the specific amount of component (E) was further blended. On the other hand, in Comparative Example 7A, since the amount of the component (A) used was smaller than the range as defined by the present invention, the surface appearance thereof was poor. In Comparative Example 8A, since the amount of the component (C) used was smaller than the specific range as defined by the present invention, the impact resistance, delamination resistance and surface appearance thereof were poor. In Comparative Example 9A, since the amount of the component (E) used was larger than the specific range as defined by the present invention, the impact resistance, delamination resistance and surface appearance thereof were poor. In Comparative Example 10A, since the amount of the component (B) used was smaller than the specific range as defined by the present invention, the impact resistance, delamination resistance and surface appearance thereof were poor.

<Thermoplastic resin composition having destaticizing property (2)>

Reference Examples 1B to 7B, Examples 8B to 24B and Comparative Examples 1B to 7B:

The components shown in Tables 3 to 5 were blended together at ratios shown in these Tables using a Henschel mixer, and melt-kneaded using a twin-screw extruder (cylinder set temperature: 210˚C) and then pelletized. The resulting pellets were fully dried and then injection-molded (at a cylinder set temperature of 200˚C) to obtain a test piece for the evaluations of destaticizing property, durability of destaticizing property, impact resistance, chemical resistance and abrasion resistance and these evaluations were conducted by the above methods. The evaluation results are shown in Tables 6 to 8.

Table 3

| Ex. No. | Blending ratios (Parts) | | | | | |
|---|---|---|---|---|---|---|
| | Component (A) | | | | Component (B) | |
| | Kind | Parts by mass | Kind | Parts by mass | Kind | Parts by mass |
| 1B+ | A1 | 40 | - | - | B1 | 25 |
| 2B+ | A2 | 40 | - | - | B1 | 25 |
| 3B+ | A1 | 20 | A2 | 20 | B1 | 25 |
| 4B+ | A1 | 40 | - | - | B4 | 25 |
| 5B+ | A1 | 40 | - | - | B1 | 25 |
| 6B+ | A1 | 40 | - | - | B1 | 25 |
| 7B+ | A1 | 40 | - | - | B1 | 25 |
| 8B | A1 | 40 | - | - | B1 | 25 |
| 9B | A1 | 40 | - | - | B1 | 25 |
| 10B | A2 | 40 | - | - | B1 | 25 |
| 11B | A1 | 20 | A2 | 20 | B1 | 25 |
| 12B | A1 | 40 | - | - | B2 | 25 |
| 13B | A1 | 40 | - | - | B3 | 25 |

+: Reference Example (not within the scope of the present application)

Table 3 (Continued)

| Ex. No. | Blending ratios (Parts) | | | | | |
|---|---|---|---|---|---|---|
| | Component (C) | | | | Component (D) | |
| | Kind | Parts by mass | Kind | Parts by mass | Kind | Parts by mass |
| 1B+ | C2-1 | 20 | - | - | D3 | 15 |
| 2B+ | C2-1 | 20 | - | - | D3 | 15 |
| 3B+ | C2-1 | 20 | - | - | D3 | 15 |
| 4B+ | C2-1 | 20 | - | - | D3 | 15 |
| 5B+ | C2-1 | 20 | - | - | D1 | 15 |
| 6B+ | C2-1 | 20 | - | - | D2 | 15 |
| 7B+ | C2-1 | 20 | - | - | D4 | 15 |
| 8B | C2-1 | 20 | - | - | D3 | 15 |
| 9B | C2-1 | 20 | - | - | D3 | 15 |
| 10B | C2-1 | 20 | - | - | D3 | 15 |
| 11B | C2-1 | 20 | - | - | D3 | 15 |
| 12B | C2-1 | 20 | - | - | D3 | 15 |
| 13B | C2-1 | 20 | - | - | D3 | 15 |

Table 3 (Continued)

| Ex. No. | Blending ratios (Parts) | | | | |
|---|---|---|---|---|---|
| | Component (E) | | | | Component (G) |
| | Kind | Parts by mass | Kind | Parts by mass | Parts by mass |
| 1B+ | - | - | - | - | - |
| 2B+ | - | - | - | - | - |
| 3B+ | - | - | - | - | - |
| 4B+ | - | - | - | - | - |
| 5B+ | - | - | - | - | - |
| 6B+ | - | - | - | - | - |
| 7B+ | - | - | - | - | 1.2 |
| 8B | E1 | 1 | E2 | 1 | - |
| 9B | E1 | 15 | E2 | 15 | - |
| 10B | E1 | 15 | E2 | 15 | - |
| 11B | E1 | 15 | E2 | 15 | - |
| 12B | E1 | 15 | E2 | 15 | - |
| 13B | E1 | 15 | E2 | 15 | - |

+: Reference Example (not within the scope of the present application)

Table 4

| Ex. No. | Blending ratios (Parts) | | | | | |
|---|---|---|---|---|---|---|
| | Component (A) | | | | Component (B) | |
| | Kind | Parts by mass | Kind | Parts by mass | Kind | Parts by mass |
| 14B | A1 | 40 | - | - | B4 | 25 |
| 15B | A1 | 40 | - | - | B1 | 25 |
| 16B | A1 | 40 | - | - | B1 | 25 |
| 17B | A1 | 40 | - | - | B1 | 25 |
| 18B | A1 | 40 | - | - | B1 | 25 |
| 19B | A1 | 40 | - | - | B1 | 25 |
| 20B | A1 | 30 | - | - | B1 | 30 |
| 21B | A1 | 50 | - | - | B1 | 20 |
| 22B | A1 | 25 | - | - | B1 | 25 |
| 23B | A1 | 40 | - | - | B1 | 25 |
| 24B | A1 | 40 | - | - | B1 | 25 |

Table 4 (Continued)

| Ex. No. | Blending ratios (Parts) | | | | | |
|---|---|---|---|---|---|---|
| | Component (C) | | | | Component (D) | |
| | Kind | Parts by mass | Kind | Parts by mass | Kind | Parts by mass |
| 14B | C2-1 | 20 | - | - | D3 | 15 |
| 15B | C1 | 20 | - | - | D3 | 15 |
| 16B | C2-2 | 20 | - | - | D3 | 15 |
| 17B | C2-1 | 20 | - | - | D1 | 15 |
| 18B | C2-1 | 20 | - | - | D2 | 15 |
| 19B | C2-1 | 20 | - | - | D4 | 15 |
| 20B | C2-1 | 20 | - | - | D4 | 20 |
| 21B | C2-1 | 15 | - | - | D4 | 15 |
| 22B | C2-1 | 20 | - | - | D4 | 30 |
| 23B | C5 | 20 | - | - | D4 | 15 |
| 24B | C2-1 | 10 | C5 | 10 | D4 | 15 |

Table 4 (Continued)

| Ex. No. | Blending ratios (Parts) | | | | |
|---|---|---|---|---|---|
| | Component (E) | | | | Component (G) |
| | Kind | Parts by mass | Kind | Parts by mass | Parts by mass |
| 14B | E1 | 15 | E2 | 15 | - |
| 15B | E1 | 15 | E2 | 15 | - |
| 16B | E1 | 15 | E2 | 15 | - |
| 17B | E1 | 15 | E2 | 15 | - |
| 18B | E1 | 15 | E2 | 15 | - |
| 19B | E1 | 15 | E2 | 15 | 1.2 |
| 20B | E1 | 15 | E2 | 15 | 1.2 |
| 21B | E1 | 15 | E2 | 15 | 1.2 |
| 22B | E1 | 15 | E2 | 15 | 1.2 |
| 23B | E1 | 15 | E2 | 15 | 1.2 |
| 24B | E1 | 15 | E2 | 15 | 1.2 |

Table 5

| Comp. Ex. No. | Blending ratios (Parts) | | | | | |
|---|---|---|---|---|---|---|
| | Component (A) | | | | Component (B) | |
| | Kind | Parts by mass | Kind | Parts by mass | Kind | Parts by mass |
| 1B | A1 | 95 | - | - | B1 | 2 |
| 2B | A1 | 39 | - | - | B1 | 40 |
| 3B | A1 | 10 | - | - | B1 | 10 |
| 4B | A1 | 42 | - | - | B1 | 42 |
| 5B | A1 | 42 | - | - | B1 | 42 |
| 6B | A1 | 39 | - | - | B1 | 40 |
| 7B | A1 | 10 | - | - | B1 | 10 |

Table 5 (Continued)

| Comp. Ex. No. | Blending ratios (Parts) | | | | | |
|---|---|---|---|---|---|---|
| | Component (C) | | | | Component (D) | |
| | Kind | Parts by mass | Kind | Parts by mass | Kind | Parts by mass |
| 1B | C2-1 | 2 | - | - | D3 | 1 |
| 2B | C2-1 | 20 | - | - | D3 | 1 |
| 3B | C2-1 | 10 | - | - | D3 | 70 |
| 4B | C2-1 | 1 | - | - | D3 | 15 |
| 5B | C2-1 | 1 | - | - | D3 | 15 |
| 6B | C2-1 | 20 | - | - | D3 | 1 |
| 7B | C2-1 | 10 | - | - | D3 | 70 |

Table 5 (Continued)

| Comp. Ex. No. | Blending ratios (Parts) | | | | |
|---|---|---|---|---|---|
| | Component (E) | | | | Component (G) |
| | Kind | Parts by mass | Kind | Parts by mass | Parts by mass |
| 1B | - | - | - | - | - |
| 2B | - | - | - | - | - |
| 3B | - | - | - | - | - |
| 4B | - | - | - | - | - |
| 5B | E1 | 15 | E2 | 15 | - |
| 6B | E1 | 15 | E2 | 15 | - |
| 7B | E1 | 15 | E2 | 15 | - |

Table 6

| Ex. No. | Evaluation results | | |
|---|---|---|---|
| | Destaticizing property (Sec) | Durability of destaticizing property (Sec) | Impact resistance (B) (KJ/m$^2$) |
| 1B+ | 0.85 | 0.85 | 25 |
| 2B+ | 0.95 | 0.95 | 18 |
| 3B+ | 0.85 | 0.85 | 25 |
| 4B+ | 0.85 | 0.85 | 28 |
| 5B+ | 1.1 | 1.1 | 22 |
| 6B+ | 0.97 | 0.97 | 24 |
| 7B+ | 0.23 | 0.23 | 25 |
| 8B | 0.85 | 0.85 | 25 |
| 9B | 0.53 | 0.53 | 45 |
| 10B | 0.62 | 0.62 | 39 |
| 11B | 0.48 | 0.48 | 48 |
| 12B | 0.53 | 0.53 | 40 |
| 13B | 0.53 | 0.53 | 45 |

Table 6 (Continued)

| Ex. No. | Evaluation results | |
|---|---|---|
| | Chemical resistance | Abrasion resistance (mg) |
| 1B+ | ○ | 25 |
| 2B+ | ○ | 28 |
| 3B+ | ○ | 23 |
| 4B+ | ○ | 22 |
| 5B+ | ○ | 27 |
| 6B+ | ○ | 18 |
| 7B+ | ○ | 25 |
| 8B | ○ | 25 |
| 9B | ○ | 20 |
| 10B | ○ | 20 |
| 11B | ○ | 18 |
| 12B | ○ | 20 |
| 13B | ○ | 20 |

+: Reference Example (not within the scope of the present application)

Table 7

| Ex. No. | Evaluation results | | |
|---|---|---|---|
| | Destaticizing property (Sec) | Durability of destaticizing property (Sec) | Impact resistance (B) ($KJ/m^2$) |
| 14B | 0.53 | 0.53 | 47 |
| 15B | 0.48 | 0.48 | 45 |
| 16B | 0.53 | 0.53 | 45 |
| 17B | 0.61 | 0.61 | 40 |
| 18B | 0.53 | 0.53 | 43 |
| 19B | 0.11 | 0.11 | 45 |
| 20B | 0.05 | 0.05 | 50 |
| 21B | 0.11 | 0.11 | 45 |
| 22B | 0.01 | 0.01 | 63 |
| 23B | 0.11 | 0.11 | 35 |
| 24B | 0.11 | 0.11 | 48 |

Table 7 (Continued)

| Ex. No. | Evaluation results | |
|---|---|---|
| | Chemical resistance | Abrasion resistance (mg) |
| 14B | ○ | 18 |
| 15B | ○ | 23 |
| 16B | ○ | 20 |
| 17B | ○ | 22 |
| 18B | ○ | 17 |
| 19B | ○ | 22 |
| 20B | ○ | 23 |
| 21B | ○ | 20 |
| 22B | ○ | 28 |
| 23B | ○ | 21 |
| 24B | ○ | 18 |

**Table 8**

| Comp. Ex. No. | Evaluation results | | |
|---|---|---|---|
| | Destaticizing property (Sec) | Durability of destaticizing property (Sec) | Impact resistance (B) (KJ/m²) |
| 1B+ | 20≤ | 20≤ | 3 |
| 2B+ | 20≤ | 20≤ | 23 |
| 3B+ | 0.72 | 0.72 | 11 |
| 4B+ | 1.5 | 1.5 | 2 |
| 5B+ | 0.55 | 0.55 | 4 |
| 6B+ | 20≤ | 20≤ | 23 |
| 7B+ | 0.51 | 0.51 | 25 |

+. Reference Example (not within the scope of the present application)

**Table 8 (Continued)**

| Ex. No. | Evaluation results | |
|---|---|---|
| | Chemical resistance | Abrasion resistance (mg) |
| 14B | × | 27 |
| 15B | ○ | 22 |
| 16B | ○ | 66 |
| 17B | × | 81 |
| 18B | × | 102 |
| 19B | ○ | 18 |
| 20B | ○ | 56 |

From the results shown in Tables 3 to 8, the followings are apparently recognized. Thus, the resin compositions obtained in Reference Examples 1B to 7B and Comparative Examples 1B to 4B were the resin composition of Examples and comparative Examples containing no styrene-based resin (E). The resin compositions obtained in these Examples were excellent in the destaticizing property, durability of destaticizing property, impact resistance, chemical resistance and abrasion resistance. On the other hand, in Comparative Example 1B, since the amount of the component (A) used was larger than the range as defined by the present invention and the amounts of the components (B), (C) and (D) used were smaller than the specific range as defined by the present invention, the destaticizing property, impact resistance and chemical resistance were poor. In Comparative Example 2B, since the amount of the component (D) used was smaller than the range as defined by the present invention, the destaticizing property was poor. In Comparative Example 3B, since the amount of the component (D) used was larger than the specific range as defined by the present invention, the impact resistance and abrasion resistance were poor. In Comparative Example 4B, since the amount of the component (C) used was smaller than the specific range as defined by the present invention, the impact resistance, chemical resistance and abrasion resistance were poor.

On the other hand, the resin composition obtained in Examples 8B to 24B and Comparative Examples 5B to 7B were the resin compositions of Examples and comparative Examples containing the styrene-based resin (E). The resin compositions obtained in these Examples were excellent in the destaticizing property, durability of destaticizing property, impact resistance, chemical resistance and abrasion resistance. Further, the resin compositions obtained in these Examples were especially excellent in the destaticizing property and impact resistance because the styrene-based resin (E) was blended. On the other hand, in Comparative Example 5B, since the amount of the component (D) used was smaller than the range as defined by the present invention, the impact resistance, chemical resistance and abrasion resistance were poor. In Comparative Example 6B, since the amount of the component (D) used was smaller than the range as defined by the present invention, the destaticizing property was poor. In Comparative Example 7B, since the amount of the component (D) used was larger than the specific range as defined by the present invention, the impact

resistance and abrasion resistance were poor.

## Claims

1. A thermoplastic resin composition comprising:

    5 to 95% by mass of an aliphatic polyester (A),
    4 to 94% by mass of an olefin-based resin (B) and
    1 to 40% by mass of an aromatic vinyl-based polymer (C) where the total amount of component (A), component (B) and component (C) is 100% by mass,
    wherein the thermoplastic resin composition further comprises 3 to 100 parts by mass of a styrene-based resin (E) based on 100 parts by mass of total mass of component (A), component (B) and component (C),
    the aromatic vinyl-based polymer (C) being at least one selected from:

        an aromatic vinyl-based polymer (C1) which is an elastomer comprising a block copolymer comprising a polymer block mainly comprising an aromatic vinyl compound and a polymer block mainly comprising a conjugated diene compound,
        an aromatic vinyl-based polymer (C2) which is an elastomer obtained by hydrogenation of the aromatic vinyl-based polymer (C1), and
        an aromatic vinyl-based polymer (C3) which is a graft copolymer obtained by polymerizing a vinyl-based monomer containing an aromatic vinyl compound in the presence of an olefin-based polymer, and
        wherein the styrene-based resin (E) is a styrene-based resin (E1) and/or styrene-based resin (E2), the styrene-based resin (E1) is a rubber-reinforced styrene-based resin obtained by polymerizing a vinyl-based monomer comprising an aromatic vinyl compound in the presence of a rubber polymer providing that the aromatic vinyl-based polymer (C1) and the aromatic vinyl-based polymer (C2) are excepted, and the styrene-based resin (E2) is a polymer obtained by (co)polymerizing a vinyl-based monomer containing an aromatic vinyl compound in the presence of no rubber polymer as defined in the styrene-based resin (E1).

2. A destaticized thermoplastic resin composition comprising:

    10 to 90% by mass of an aliphatic polyester (A),
    4 to 80% by mass of an olefin-based resin (B),
    3 to 40% by mass of an aromatic vinyl-based polymer (C) and
    3 to 60% by mass of a block copolymer (D) comprising a block (D1) comprising at least one selected from the group consisting of polyamides, polyesters and polyolefins, and a hydrophilic polymer block (D2)
    where the total amount of component (A), component (B), component (C) and component (D) is 100% by mass,
    the aromatic vinyl-based polymer (C) being at least one selected from:

        an aromatic vinyl-based polymer (C1) which is an elastomer comprising a block copolymer comprising a polymer block mainly comprising an aromatic vinyl compound and a polymer block mainly comprising a conjugated diene compound,
        an aromatic vinyl-based polymer (C2) which is an elastomer obtained by hydrogenation of the aromatic vinyl-based polymer (C1), and
        an aromatic vinyl-based polymer (C3) which is a graft copolymer obtained by polymerizing a vinyl-based monomer containing an aromatic vinyl compound in the presence of an olefin-based polymer.

3. A destaticized thermoplastic resin composition according to claim 2, further comprising 5 to 100 parts by mass of a styrene-based resin (E) based on 100 parts by mass of total mass of component (A), component (B), component (C) and component (D), wherein the styrene-based resin (E) is a styrene-based resin (E1) and/or styrene-based resin (E2), the styrene-based resin (E1) is a rubber-reinforced styrene-based resin obtained by polymerizing a vinyl-based monomer comprising an aromatic vinyl compound in the presence of a rubber polymer providing that the aromatic vinyl-based polymer (C1) and the aromatic vinyl-based polymer (C2) are excepted, and the styrene-based resin (E2) is a polymer obtained by (co)polymerizing a vinyl-based monomer containing an aromatic vinyl compound in the presence of no rubber polymer as defined in the styrene-based resin (E1).

4. A thermoplastic resin composition according to any one of claims 1 to 3, wherein the aliphatic polyester (A) is a polylactic acid-based resin.

5. A thermoplastic resin composition according to any one of claims 1 to 3, wherein the aliphatic polyester (A) is an aliphatic polyester mainly obtained from 1,4-butanediol and succinic acid.

6. A thermoplastic resin composition according to claim 5, wherein the aliphatic polyester (A) is an aliphatic polyester copolymerized with lactic acid as the other component.

7. A molded product comprising the thermoplastic resin composition as defined in any one of claims 1 to 6.

**Patentansprüche**

1. Thermoplastische Harzzusammensetzung, die folgendes umfasst:

   5 bis 95 Massen% eines aliphatischen Polyesters (A),
   4 bis 94 Massen% eines Olefin-basierten Harzes (B) und
   1 bis 40 Massen% eines aromatischen Vinyl-basierten Polymers (C),
   worin die Gesamtmenge der Komponente (A), der Komponente (B) und der Komponente (C) 100 Massen% ist, und
   worin die thermoplastische Harzzusammensetzung weiterhin 3 bis 100 Massen-Teile eines Styren-basierten Harzes (E), bezogen auf 100 Massen-Teile der Gesamtmasse der Komponente (A), der Komponente (B) und der Komponente (C) umfasst,
   wobei das aromatische Vinyl-basierte Polymer (C) mindestens ein solches ist, das aus den folgenden ausgewählt ist:

      einem aromatischen Vinyl-basierten Polymer (C1), welches ein Elastomer ist, das ein Block-Copolymer umfasst, welches ein Block-Polymer, das hauptsächlich eine aromatische Vinylverbindung umfasst, und ein Block-Polymer umfasst, das hauptsächlich eine konjugierte Dienverbindung umfasst,
      ein aromatisches Vinyl-basiertes Polymer (C2), welches ein Elastomer ist, das durch Hydrierung des aromatischen Vinyl-basierten Polymers (C1) erhältlich ist und
      ein aromatisches Vinyl-basiertes Polymer (C3), welches ein Pfropf-Copolymer ist, das durch Polymerisation eines Vinyl-basierten Monomers in Gegenwart eines Olefin-basierten Polymers erhältlich ist, wobei das Vinyl-basierte Monomer eine aromatische Vinylverbindung enthält, und
      wobei das Styren-basierte Harz (E) ein Styren-basiertes Harz (E1) und/oder ein Styren-basiertes Harz (E2) ist,
      wobei das Styren-basierte Harz (E1) ein Kautschukverstärktes Styren-basiertes Harz ist, das durch Polymerisation eines Vinyl-basierten Monomers, das eine aromatische Vinylverbindung umfasst, in Gegenwart eines Kautschukpolymers erhältlich ist, vorausgesetzt, dass das aromatische Vinyl-basierte Polymer (C1) und das aromatische Vinyl-basierte Polymer (C2) ausgenommen sind, und dass das Styren-basierte Harz (E2) ein Polymer ist, das durch (Co)Polymerisation eines Vinyl-basierten Monomers, das eine aromatische Vinylverbindung enthält, in Gegenwart keines Kautschukpolymers, wie es für das Styren-basierte Harz (E1) definiert ist, erhältlich ist.

2. Antistatische thermoplastische Harzzusammensetzung, die folgendes umfasst:

   10 bis 90 Massen% eines aliphatischen Polyesters (A),
   4 bis 80 Massen% eines Olefin-basierten Harzes (B),
   3 bis 40 Massen% eines aromatischen Vinyl-basierten Polymers (C) und
   3 bis 60 Massen% eines Block-Copolymers (D), das einen Block (D1) umfasst, welches mindestens eines aus den folgenden umfasst: Polyamiden, Polyestern und Polyolefinen, und einem hydrophilen Polymerblock (D2),
   wobei die Gesamtmenge der Komponente (A), der Komponente (B), der Komponente (C) und der Komponente (D) 100 Massen% ist,
   das aromatische Vinyl-basierte Polymer (C) mindestens eines ist, das aus den folgenden ausgewählt ist:

      einem aromatischen Vinyl-basierten Polymer (C1), welches ein Elastomer ist, das ein Block-Copolymer umfasst, das einen Polymerblock umfasst, der hauptsächlich eine aromatische Vinylverbindung umfasst, und einen Polymerblock umfasst, der hauptsächlich eine konjugierte Dienverbindung umfasst,
      ein aromatisches Vinyl-basiertes Polymer (C2), das ein Elastomer ist, welches durch Hydrierung des aromatischen Vinyl-basierten Polymers (C1) erhältlich ist und

ein aromatisches Vinyl-basiertes Polymer (C3), welches ein Pfropf-Copolymer ist, das durch Polymerisation eines Vinyl-basierten Monomers, das eine aromatische Vinylverbindung enthält, in Gegenwart eines Olefin-basierten Polymers erhältlich ist.

**3.** Antistatische thermoplastische Harzzusammensetzung gemäß Anspruch 2, die weiterhin 5 bis 100 Massen-Teile eines Styren-basierten Harzes (E), bezogen auf 100 Massen-Teile der Gesamtmasse der Komponente (A), der Komponente (B), der Komponente (C) und der Komponente (D) umfasst, wobei das Styren-basierte Harz (E) ein Styren-basiertes Harz (E1) und/oder ein Styren-basiertes Harz (E2) ist, wobei das Styren-basierte Harz (E1) ein Kautschukverstärktes Styren-basiertes Harz ist, welches durch Polymerisation eines Vinyl-basierten Monomers, das eine aromatische Vinylverbindung umfasst, in Gegenwart eines Kautschuk-Polymers erhältlich ist, vorausgesetzt, dass das aromatische Vinyl-basierte Polymer (C1) und das aromatische Vinyl-basierte Polymer (C2) ausgenommen sind, und das Styren-basierte Harz (E2) ein Polymer ist, welches durch (Co)Polymersation eines Vinyl-basieren Monomers, das eine aromatische Vinylverbindung enthält, in Gegenwart keines Kautschuk-Polymers, wie es für das Styren-basierte Harz (E1) definiert ist, erhältlich ist.

**4.** Thermoplastische Harzzusammensetzung gemäß irgendeinem der Ansprüche 1 bis 3, wobei der aliphatische Polyester (A) ein Polymilchsäure-basiertes Harz ist.

**5.** Thermoplastische Harzzusammensetzung gemäß irgendeinem der Ansprüche 1 bis 3, wobei der aliphatische Polyester (A) ein aliphatischer Polyester ist, der hauptsächlich aus 1,4-Butandiol und Succinsäure erhältlich ist.

**6.** Thermoplastische Harzzusammensetzung gemäß Anspruch 5, wobei der aliphatische Polyester (A) ein aliphatischer Polyester ist, der mit Milchsäure als weiterer Komponente copolymerisiert ist.

**7.** Formprodukt, das die thermoplastische Harzzusammensetzung, wie in irgendeinem der Ansprüche 1 bis 6 definiert, umfasst.

## Revendications

**1.** Composition de résine thermoplastique comprenant :

5 à 95 % en masse d'un polyester aliphatique (A),
4 à 94 % en masse d'une résine à base d'oléfine (B) et
1 à 40 % en masse d'un polymère à base de vinyle aromatique (C), où la quantité totale de composant (A), de composant (B) et de composant (C) est de 100 % en masse,
dans laquelle la composition de résine thermoplastique comprend en outre 3 à 100 parties en masse d'une résine à base de styrène (E) sur la base de 100 parties en masse de la masse totale du composant (A), du composant (B) et du composant (C),
le polymère à base de vinyle aromatique (C) étant au moins un sélectionné parmi :

un polymère à base de vinyle aromatique (C1) qui est un élastomère comprenant un copolymère séquencé comprenant un bloc de polymère comprenant principalement un composé de vinyle aromatique et un bloc de polymère comprenant principalement un composé de diène conjugué,
un polymère à base de vinyle aromatique (C2) qui est un élastomère obtenu par hydrogénation du polymère à base de vinyle aromatique (C1), et
un polymère à base de vinyle aromatique (C3) qui est un copolymère greffé obtenu en polymérisant un monomère à base de vinyle contenant un composé de vinyle aromatique en présence d'un polymère à base d'oléfine, et
dans laquelle la résine à base de styrène (E) est une résine à base de styrène (E1) et/ou une résine à base de styrène (E2), la résine à base de styrène (E1) est une résine à base de styrène renforcée de caoutchouc obtenue en polymérisant un monomère à base de vinyle comprenant un composé de vinyle aromatique en présence d'un polymère de caoutchouc en prévoyant que le polymère à base de vinyle aromatique (C1) et le polymère à base de vinyle aromatique (C2) sont exclus, et la résine à base de styrène (E2) est un polymère obtenu en (co)polymérisant un monomère à base de vinyle contenant un composé de vinyle aromatique en présence de polymère non-caoutchouc tel que défini dans la résine à base de styrène (E1).

**2.** Composition de résine thermoplastique à électricité statique éliminée comprenant :

10 à 90 % en masse d'un polyester aliphatique (A),
4 à 80 % en masse d'une résine à base d'oléfine (B),
3 à 40 % en masse d'un polymère à base de vinyle aromatique (C) et
3 à 60 % en masse d'un copolymère séquencé (D) comprenant un bloc (D1) comprenant au moins un sélectionné à partir du groupe constitué par des polyamides, des polyesters et des polyoléfines, et un bloc de polymère hydrophile (D2) où la quantité totale du composant (A), du composant (B), du composant (C) et du composant (D) est de 100 % en masse,
le polymère à base de vinyle aromatique (C) étant au moins un sélectionné parmi :

un polymère à base de vinyle aromatique (C1) qui est un élastomère comprenant un copolymère séquencé comprenant un bloc de polymère comprenant principalement un composé de vinyle aromatique et un bloc de polymère comprenant principalement un composé de diène conjugué,
un polymère à base de vinyle aromatique (C2) qui est un élastomère obtenu par hydrogénation du polymère à base de vinyle aromatique (C1), et
un polymère à base de vinyle aromatique (C3) qui est un copolymère greffé obtenu en polymérisant un monomère à base de vinyle contenant un composé de vinyle aromatique en présence d'un polymère à base d'oléfine.

**3.** Composition de résine thermoplastique à électricité statique éliminée selon la revendication 2, comprenant en outre 5 à 100 parties en masse d'une résine à base de styrène (E) sur base de 100 parties en masse de masse totale du composant (A), du composant (B), du composant (C) et du composant (D), dans laquelle la résine à base de styrène (E) est une résine à base de styrène (E1) et/ou une résine à base de styrène (E2), la résine à base de styrène (E1) est une résine à base de styrène renforcée de caoutchouc obtenue en polymérisant un monomère à base de vinyle comprenant un composé de vinyle aromatique en présence d'un polymère de caoutchouc en prévoyant que le polymère à base de vinyle aromatique (C1) et le polymère à base de vinyle aromatique (C2) sont exclus, et la résine à base de styrène (E2) est un polymère obtenu en (co)polymérisant un monomère à base de vinyle contenant un composé de vinyle aromatique en présence de polymère non-caoutchouc tel que défini dans la résine à base de styrène (E1).

**4.** Composition de résine thermoplastique selon l'une quelconque des revendications 1 à 3, dans laquelle le polyester aliphatique (A) est une résine à base d'acide polylactique.

**5.** Composition de résine thermoplastique selon l'une quelconque des revendications 1 à 3, dans laquelle le polyester aliphatique (A) est un polyester aliphatique principalement obtenu à partir de 1,4-butanediol et d'acide succinique.

**6.** Composition de résine thermoplastique selon la revendication 5, dans laquelle le polyester aliphatique (A) est un polyester aliphatique copolymérisé avec de l'acide lactique en tant que l'autre composant.

**7.** Produit moulé comprenant la composition de résine thermoplastique telle que définie dans l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9316310 A
- JP 10251498 A
- JP 2002037987 A
- JP 5310845 A
- JP 47028915 A
- JP 47003252 A
- JP 48002423 A
- JP 48020038 A
- JP 60081217 A
- JP 428704 A
- JP 436636 A
- JP 63004841 A
- JP 63005401 A
- JP 2133406 A
- JP 1297413 A
- JP 2001220506 A
- JP 3062804 A
- JP 2001278985 A
- JP 2003048990 A


### Non-patent literature cited in the description


- **MURATA, Katsuhide ; MAKINO, Tadahiko.** *Journal of Japan Chemistry Institute,* 1975, 192